# EUROPÄISCHE PATENTSCHRIFT

(11) **EP 3 894 846 B1**
(45) Veröffentlichungstag und Bekanntmachung des Hinweises auf die Patenterteilung: **28.02.2024**
(21) Anmeldenummer: 19808740.5
(22) Anmeldetag: 19.11.2019
(51) Int. Cl.: G01N 23/046

(54) **INDUSTRIELLES RÖNTGEN-WERKSTÜCKVERMESSUNGSSYSTEM UND VERFAHREN ZUM BETREIBEN EINES SOLCHEN**
INDUSTRIAL X-RAY WORKPIECE MEASURING SYSTEM AND METHOD FOR OPERATING SAME
SYSTÈME DE MESURE DE PIÈCES À RAYONS X INDUSTRIEL ET SON PROCÉDÉ DE FONCTIONNEMENT

(30) Priorität: 13.12.2018 DE 102018132025
(43) Veröffentlichungstag der Anmeldung: 20.10.2021
(73) Patentinhaber: Intom GmbH, 78333 Stockach (DE)
(72) Erfinder: EBNER, Severin, 88697 Bermatingen (DE); SIMON, Martin, 78351 Bodman-Ludwigshafen (DE)
(74) Vertreter: Patent- und Rechtsanwälte Behrmann Wagner PartG mbB
(86) Internationale Anmeldenummer: PCT/EP2019/081854
(87) Internationale Veröffentlichungsnummer: WO 2020/120083

(56) Entgegenhaltungen:
- EP-A1- 3 223 002
- CN-A- 106 501 288
- DE-A1-102006 032 607
- DE-A1-102007 016 370
- US-A1- 2015 160 354

## Beschreibung

Die vorliegende Erfindung betrifft ein industrielles Röntgen-Werkstückvermessungssystem, insbesondere ein industrielles Röntgentomografiesystem, nach dem Oberbegriff des Patentanspruchs 1. Ferner betrifft die vorliegende Erfindung ein Verfahren zum Betreiben eines derartigen gattungsgemäßen Systems.

Aus dem Stand der Technik sind industrielle Röntgen-Werkstückvermessungssysteme, insbesondere realisiert als Röntgentomografiesysteme, allgemein bekannt und werden für eine Vielzahl von Werkstücken zur Fertigungs-, Material-, Qualitäts- oder Sicherheitsprüfung verwendet. Derartige Technologien eignen sich insbesondere zur Detektion nicht-sichtbarer Fehler eines derartigen Werkstücks, wie sie etwa in einem (ansonsten optisch nicht zugänglichen) Inneren des Werkstücks auftreten können und auf dem aus der Durchstrahlung des Werkstücks mit den Röntgenstrahlen erhaltenen Röntgenbild erkennbar sind.

Gattungsgemäß weisen derartige Werkstückvermessungssysteme zwischen einer Röntgenquelle und Röntgendetektormitteln vorgesehene Werkstückträgermittel auf, auf welchen das zu prüfende Werkstück geeignet platziert (und etwa im Fall einer Tomografievorrichtung, zum Fertigen einer Mehrzahl von Röntgenabbildungen, drehbar) von emittierten Röntgenstrahlen der Röntgenquelle durchstrahlbar ist. Den Röntgendetektormitteln nachgeschaltete elektronische Auswertemittel ermöglichen dann, üblicherweise im Wege der elektronischen Bildauswertung, eine Analyse des erzeugten Röntgenbildes, sodass entsprechend dem vorgesehenen Betriebszweck geeignete Maßnahmen ausgelöst werden können.

Als aus dem Stand der Technik allgemein bekannt ist es dabei vorauszusetzen, die von der Röntgenquelle üblicherweise konusartig aufgeweitet austretende bzw. aufgespreizte Röntgenstrahlung so auf die Röntgendetektormittel zu projizieren, dass deren - üblicherweise matrixartig in einer Fläche angeordnete - Bilderfassungselemente bestmöglich mit dem Röntgen-Abbild des durchstrahlten Werkstücks versehen sind, sodass insoweit eine bestmögliche Bildauflösung (in Abhängigkeit von einer effektiven Dimension, also z.B. einer Maximalerstreckung des Werkstücks) realisierbar ist.

Zum Zweck der bestmöglichen Bildauflösung ist es dabei üblich und gleichermaßen als bekannt vorauszusetzen, eine im Röntgenbrennfleck (d.h. im Hinblick auf eine effektive Röntgenaustrittsfläche der Röntgenquelle) minimierte Röntgenquelle einzusetzen, da bei der skizzierten aufgefächerten (vergrößernden) Röntgenstrahlungsprojektion durch das zu vermessende Werkstück hindurch eine Röntgenquelle mit möglichst kleinem Brennfleck (ideal punktförmig) die bestmögliche Auflösung bei geringster Unschärfe auf einer Auftrittsfläche der Röntgendetektormittel erzeugt.

Nachteilig ist an diesem Ansatz jedoch, dass ein durch die Abbildungsschärfeerfordernisse minimierter Röntgenbrennfleck nur durch vergleichsweise aufwändige (und damit teure) Röntgenquellen realisierbar ist, wie sie etwa in Form der sogenannten offenen Mikrofokus-Röntgenquellen bekannt sind; diese sind störungsanfällig und wartungsintensiv. Ergänzend optimierungsbedürftig ist eine aufgrund der Röntgenbrennfleckbeschränkungen (im weiteren wird der Begriff "Röntgenfleck" synonym mit "Röntgenbrennfleck" benutzt) Strahlungsleistung solcher Röntgenquellen, mit wiederum nachteiligen Auswirkungen auf Durchstrahlungs- und Belichtungszeiten, Empfindlichkeitsanforderungen an die Röntgendetektormittel und dergleichen, vor der Hintergrund der gattungsgemäßen industriellen Messtechnik, da hier - anders als etwa im medizinischen Bereich mit biologisch bedingten Grenzen einsetzbarer Röntgenstrahlungsleistung - höhere Strahlungsleistung zu kürzeren Belichtungszeiten und damit zu erhöhter Prozessgeschwindigkeit führen kann.

Die als aus dem Stand der Technik prinzipiell bekannt vorauszusetzende Technologie impliziert, dass die Röntgenquelle und/oder die Röntgendetektormittel relativ zueinander bzw. relativ zum Werkstückträger entlang einer Ausbreitungsrichtung der Röntgenstrahlung verstellbar sind, denn so lässt sich die bekannte, von der Quelle ausgehende und konusförmige Strahlung bestmöglich und unter maximaler Ausnutzung der Röntgendetektormittel an verschiedene Dimensionen eines zu vermessenden Werkstücks anpassen.

Nach wie vor ist jedoch die als gattungsbildend herangezogene Technologie - prinzipbedingt - optimierungsbedürftig und insbesondere nicht ohne weiteres und flexibel für eine Vielzahl verschiedener Werkstücke und jeweils zugehöriger verschiedener Werkstückdimensionen optimal geeignet: So führen etwa (relativ) kleine Werkstücke im Strahlungsgang, projiziert auf eine maximale Auftrittsfläche der Röntgendetektormittel, zwar zu einer bestmöglichen Ausnutzung dieses Detektors, es entstehen jedoch nach wie vor Unschärfen durch den langen Abstand zwischen dem Werkstück und dem Röntgendetektor (und damit verbundene geometrische Fehlereffekte). Dagegen vermindert zwar ein (relativ) großes Werkstück, welches dann in der Projektion näher an die Röntgendetektormittel heranrückt, diese Unschärfeprobleme, die am Werkstück auftreffende Röntgenstrahlung der (ideal punktförmigen) Quelle ist jedoch leistungsmäßig gering, und eine resultierende Geometrie des Verhältnisses des (großen) Werkstücks zu den Röntgendetektormitteln führt zu einer Bildauflösung von Bildpixeln, welche potentiell höher als benötigt ist, also unnötigen Rechenaufwand erfordert; so reicht es etwa bei zu vermessenden additiv gefertigten Werkstücken aus, wenn eine ausgewertete Auflösung der Röntgendetektormittel nur so groß ist, wie überhaupt ein zu detektierender Werkstückfehler dimensioniert sein kann.

Zusätzlich nachteilig führen etwa die bei der bekannten Vergrößerungstechnik notwendigen langen Strahlungswege zu großen System- bzw. Anlagendimensionen, was unter Berücksichtigung des erforderlichen Strahlenschutzes auch zu sehr hohem Systemgewicht (nicht selten zwischen 5.000 und 10.000 kg) führt. Solche Systeme lassen sich damit in der Regel nur ebenerdig aufstellen; verbunden damit sind häufig nur schwer erfüllbare Aufstellungs- und Betriebsbedingungen, ferner ein ungünstiges Verhältnis von Bauteil- (bzw. Werkstück-)größe zu System-/Anlagengröße sowie hohe Folgekosten für einen Betreiber. Verfahrensbedingt ändert sich die Ortsauflösung solcher Systeme linear mit der Messobjekt- bzw. Werkstückgröße - hohe Auflösungen können somit nur bei kleinen Bauteilen und hohen Vergrößerungen realisiert werden. Zahlreiche neue Anwendungen, beispielsweise bei sicherheitsrelevanten additiv gefertigten Bauteilen, erfordern jedoch auch bei größeren Bauteilen eine hohe Ortsauflösung. Im beschriebenen Stand der Technik können solche Anforderungen nur unzureichend erfüllt werden.

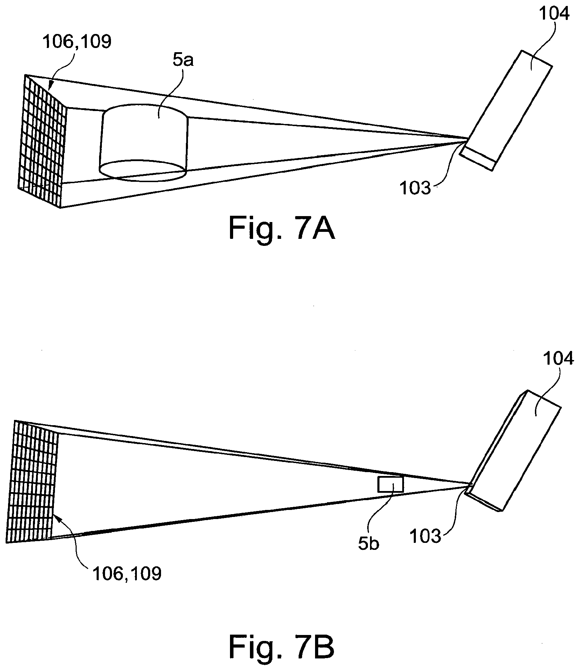

Eine derartige Anordnung zeigt schematisch die Fig. 7 mit zwei alternativen Teildarstellungen 7A, 7B zum Stand der Technik. Eine mit dem Bezugszeichen 104 versehene Röntgenquelle, aufweisend einen kleinen (und ideal punktförmigen) Röntgenbrennfleck 103, erzeugt einen das Werkstück 5a, 5b durchstrahlenden konisch- bzw. fächerartigen (aufgeweiteten) Röntgenstrahlengang bis zu Röntgendetektormitteln 106, welche, lediglich schematisch gezeigt, gattungsgemäße Szintillatormittel aufweisen, welchen optische Detektormittel 109 nachgeordnet bzw. nachgeschaltet sind. In der Fig. 7 nicht gezeigt sind (üblicherweise in der Art einer Drehtellervorrichtung ausgebildete) Werkstückträgermittel, welche das schematische und in den Teilbildern der Fig. 7 in zwei Varianten (oben großes Werkstück 5a, unten kleines Werkstück 5b) gezeigte Werkstück etwa in ansonsten bekannter Weise zur Herstellung tomografischer Mehrfachaufnahmen in eine Drehbewegung antreiben können. Die eine Komponente der Röntgendetektormittel 106 ausbildenden optischen Detektormittel 109 sind matrixartig als (ansonsten bekanntes) CMOS-Bilderfassungselement ausgebildet, dessen physikalische Pixeldichte durch die Anzahl der Bildaufnahmepixel pro Flächeneinheit bestimmt ist. Zudem werden beim Ausführungsbeispiel der Fig. 7 üblicherweise die optischen Bilddetektormittel pixelweise ausgelesen, sodass ein resultierendes elektronisches Signal die Bilddaten in einer effektiven Pixeldichte enthält, welche hier gleich der physikalischen Pixeldichte ist.

Deutlich wird aus der Fig. 7, dass zum Erreichen einer jeweils möglichst vollflächigen Abdeckung der Röntgendetektormittel 106 mit einem jeweiligen, von der Röntgenquelle 104 erzeugten Röntgenfächer, dass - in Abhängigkeit von einer jeweiligen Größe der Werkstücke 5a, 5b (deren jeweiligem Dimensionsmaß) - ein unterschiedlicher Abstand dieser Werkstücke bezogen auf die Röntgendetektormittel (genauer: deren Eingangsfläche für die Röntgenstrahlung, insoweit entsprechend der Eingangsfläche der dort vorgesehenen Szintillatormittel) ausgebildet sein muss. Mit anderen Worten, in Abhängigkeit von dem jeweiligen Dimensionsmaß des zu vermessenden Werkstücks, ist eine durch das Durchstrahlen erreichte (röntgenmäßige) Vergrößerung des Werkstücks als Projektion auf die Röntgendetektormittel signifikant unterschiedlich - das Werkstück 5a im oberen Teilbild Fig. 7A wird weniger vergrößert als das Werkstück 5b im unteren Teilbild Fig. 7B.

Die Konsequenz daraus ist, dass es im Fall des unteren Teilbildes deutlich problematischer ist, Unschärfe in der Abbildung auf die Röntgendetektormittel zu vermeiden, als im oberen Teilbild, verbunden mit längerer Belichtungszeit. Gleichzeitig verbietet sich etwa aus der Sicht des Fachmannes ein physikalisches Heranrücken des (kleineren) Werkstücks gemäß unterem Teilbild an die Röntgendetektormittel (relativ zu einem Abstand gemäß oberem Teilbild), weil dadurch dann die erzielbare Auflösung, insoweit entsprechend der physikalischen bzw. effektiven Pixeldichte in Relation zum Dimensionsmaß des Werkstück, signifikant herabgesetzt werden und gleichermaßen die Abbildungsqualität verschlechtert werden würde.

Zusätzlich notwendig ist es, um die diskutierten (nachteiligen) Unschärfeeffekte zu vermeiden, den Brennfleck 103 möglichst klein auszugestalten, was wiederum einerseits zu der nachteiligen Konsequenz führt, dass typische offene Mikrofokus-Röntgenquellen eingesetzt werden müssen, welche jedoch, neben hohen Anschaffungskosten, auch vergleichsweise wartungsaufwendig sind. Zusätzlicher Nachteil ist eine (durch den entsprechenden kleinen Röntgenbrennfleck bedingte) niedrigere Strahlungsleistung, welche wiederum nicht optimal im Hinblick auf (gewünschte) kurze Belichtungszeiten oder dergleichen Betriebsparameter ist, gerade im Fall einer tomographischen Ausgestaltung der Erfindung mit einer Vielzahl von (etwa bei gedrehtem Werkstück) zu erzeugenden Röntgen-Einzelbildern.

Ferner sind die Merkmale des Oberbegriffs aus der EP 3 223 002 A1 bekannt. Weiterhin sind noch die CN 106 501 288 A, DE 10 2007 016370 A1, US 2015/160354 A1, DE 10 2006 032607 A1 und EP 3 223 002 A1 bekannt.

Aufgabe der vorliegenden Erfindung ist es daher, ein industrielles Röntgen-Werkstückvermessungssystem nach dem Oberbegriff des Hauptanspruchs im Hinblick auf seine Eignung für eine Vielzahl von verschieden dimensionierten nicht-medizinischen Werkstücken zu verbessern, dabei insbesondere auch das gattungsgemäße System im Hinblick auf eine leichte Einricht-, Umrüst- und Anpassbarkeit für verschiedene Werkstücke zu verbessern, dabei ergänzend eine Röntgenbild- und Auswertequalität der elektronischen Auswertung zu verbessern (und insbesondere auch eine Bildschärfe des Röntgenbildes zu erhöhen), wobei Röntgendurchstrahlungs- und Röntgenbilderfassungszeiten für ein jeweiliges zu vermessendes Werkstück zu vermindern und damit zu optimieren sind. Zusätzlich ist das gattungsgemäße System im Hinblick auf Systemgröße und Systemgewicht temgewicht zu verbessern, und es ist ein realisierbares Verhältnis von Werkstückgröße und Ortsauflösung zu verbessern.

Die Aufgabe wird durch das industrielle Röntgen-Werkstückvermessungssystem, insbesondere das industrielle Röntgentomografiesystem, mit den Merkmalen des Hauptanspruchs gelöst; vorteilhafte Weiterbildungen der Erfindung sind in den Unteransprüchen beschrieben. Zusätzlich Schutz im Rahmen der Erfindung wird beansprucht für ein Verfahren zur industriellen Röntgen-Werkstückvermessung, welches besonders bevorzugt zum Betreiben des erfindungsgemäßen industriellen Röntgen-Werkstückvermessungssystems vorgesehen und geeignet ist.

In erfindungsgemäß vorteilhafter Weise wird zunächst im Rahmen der Erfindung Abstand genommen von der eingangs zum Stand der Technik skizzierten Röntgen-Projektionstechnologie, wonach Röntgenstrahlung von einer Röntgenquelle mit kleinem Brennfleck, aufgefächert und damit vergrößernd durch das Werkstück geführt, möglichst formatfüllend auf die Röntgendetektormittel projiziert wird (und wobei verschieden große Werkstücke mit verschiedenen Vergrößerungen gemessen werden). Die vorliegende Erfindung beschreitet einen anderen Weg, nämlich die Erkenntnis, dass es für zu vermessende Werkstücke verschiedener Dimensionsmaße vorteilhaft ist, nah an einer Eintrittsfläche der Röntgendetektormittel angeordnet zu sein. Dabei wird bewusst in Kauf genommen, dass, etwa bei (relativ zu den Röntgendetektormitteln) kleinem Dimensionsmaß des zu vermessenden Werkstücks auch nur eine Teilfläche der Röntgendetektormittel überhaupt wirksam mit dem Durchstrahlungsbild der auftretenden Röntgenstrahlen bestrahlt wird. Die vorliegende Erfindung erkennt jedoch, dass jeweils dann für eine solche (partielle oder vollflächige) Bestrahlungssituation die Werkstücke nicht möglichst hoch, sondern (möglichst) niedrig vergrößert werden und kleinere Werkstücke dabei mit kleinerer oder gleichbleibender Vergrößerung gemessen werden. Die Anpassung an verschiedene Werkstückgrößen und Auflösungsanforderungen geschieht (z.B. stufenweise) durch geeignete Einrichtung, ggf. Austausch oder Wechsel der Röntgendetektormittel bzw. optischen Detektormittel mit der jeweils geeigneten (effektiven) Pixeldichte.

Mit anderen Worten, die vorliegende Erfindung ermöglicht erstmals in optimierter Weise eine für eine relevante Werkstückdimension notwendige (optimierte bzw. bestmögliche) Pixeldichte einzurichten und vorzusehen, sodass dann die Vermessung mit derjenigen (effektiven) Pixeldichte erfolgen kann, die für den jeweiligen Vermessungszweck, also z.B. eine interne Fehlerdetektion üblicher Fehlerdimensionen, günstig und geeignet ist. Weder erfolgt - nachteilig - eine Auflösungsreduktion infolge der geringen Vergrößerung bei größeren Bauteilen, noch eine nachteilige große und schwere Geräteausführung aufgrund der geringeren Vergrößerung und in Folge dessen kürzerer Strahlwege. Weiterhin führt der prinzipbedingte kleinere Öffnungswinkel des das Werkstück im Röntgenstrahlengang umschließenden Konus bei kleinen Bauteilegrößen zu geringeren Artefakten bei der tomographischen Rekonstruktion ("Feldkamp-Artefakte") sowie zu einer geringeren Unschärfe in den Szintillatormitteln aufgrund der in einem steileren Winkel eintreffenden Röntgenstrahlen.

Im Rahmen der Erfindung ist dabei der Begriff der "effektiven Pixeldichte" nicht notwendigerweise gleich der physikalischen Pixeldichte zu verstehen: Zwar entspricht bei einem zweidimensionalen Bildaufnehmer, z.B. einem ansonsten bekannten CMOS-Bildsensor (welcher dann wiederum in ansonsten bekannter Weise durch Bildauswertetechnologie ausgewertet wird), die physikalische Pixeldichte dann einer effektiven Pixeldichte, wenn einzel-pixelweise das Röntgenbild elektronisch ausgewertet wird. Gleichwohl beschreibt der Begriff der "effektiven Pixeldichte" auch die Möglichkeit, dass physikalische Pixel gruppiert (also z.B. auf der Sensorauftrittsfläche in den Dimensionen zweifach, also im Beispiel vier Pixel kombiniert) ausgewertet werden; in diesem Fall wäre die effektive Pixeldichte lediglich ein Viertel der physikalischen Pixeldichte. Vorteilhaft weiterbildende Pixeldichten der Erfindung betragen mehr als 10/mm, bevorzugt mehr als 50/mm, weiter bevorzugt mehr als 100/mm (bei quadratisch angenommenen Pixeln, alternativ gelten diese Dichten auch für eine Quer- und/oder Hochdimension nicht-quadratischer Pixel).

Es hat sich zudem im Rahmen der Erfindung herausgestellt, dass die beschriebene lösungsgemäße Optimierung auch realisierbar ist, wenn - üblicherweise durch Herstellen eines physischen Abstandes - ein Verhältnis der Lichtaustrittsfläche der Szintillatormittel bezogen auf die Sensorauftrittsfläche der optischen Detektormittel verändert wird, etwa durch vorteilhafte (und nachfolgend im Detail zu beschreibende) Kameramittel oder dergleichen projizierende oder lichtleitende Technologien.

Erfindungsgemäß und vorteilhaft kombiniert wird diese Maßnahme mit der erfindungsgemäßen Lehre, den wirksamen Röntgenbrennfleck der Röntgenquelle so vorzusehen, einzurichten bzw. zu dimensionieren, dass dieser in der beanspruchten Weise an die effektive Pixeldichte angepasst ist: Es hat sich nämlich als vorteilhaft im Rahmen der Erfindung herausgestellt, dass dann, wenn eine Fläche des Röntgenflecks gleich oder größer einem Pixelflächenmaß ist (welches insoweit die sich aus der effektiven Pixeldichte ergebende Pixelfläche beschreibt), günstige und für die industriellen Messzwecke ausreichende Schärfeeigenschaften der Röntgenabbildung erzielbar sind, ohne dass etwa eine (aus den oben beschriebenen Gründen potentiell nachteilige) Brennfleck-Minimierung der Röntgenquelle erforderlich ist. Entsprechend können teure und wartungsaufwändige Hardware-Erfordernisse vermieden werden, ebenso wie ein erfindungsgemäß optimierter Brennfleck (genauer: eine optimierte Fläche des Röntgenbrennflecks) eine potentiell höhere Röntgen-Strahlungsleistung und damit Vorteile im Hinblick auf Belichtungszeiten, Detektorempfindlichkeit und dergleichen realisiert.

Es ermöglicht damit die vorliegende Erfindung, in überraschend einfacher und eleganter Weise - und in Abkehr von Messprinzipien aus dem Stand der Technik - eine hochgradig effektive Vermessung von Werkstücken verschiedenster Dimensionierungen zu gewährleisten, welche Einfachheit in Einstellung und Bedienung mit Optimierung von Bildqualität und Belichtungszeit bei gleichzeitiger Reduzierung von Herstell- und Wartungskosten kombiniert.

Zusätzlich erfindungsgemäß ist zu diesem Zweck eine die erfindungsgemäßen Szintillatormittel realisierende erste Szintillatorbaugruppe austauschbar ausgebildet, und zwar gegen eine zweite Szintillatorbaugruppe, welche sich von der ersten Szintillatorbaugruppe im Hinblick auf ihre Umwandlungseigenschaften der Röntgenstrahlen unterscheidet. Im Rahmen der Realisierung des erfindungsgemäßen Systems hat es sich nämlich als vorteilhaft herausgestellt, dass auch die Szintillatormittel selbst beachtliche Optimierungspotentiale vor dem vorgenannten Aufgaben- und Lösungskontext anbieten: So besteht etwa Optimierungsbedarf im Hinblick auf eine Dicke einzusetzender Szintillatormittel (bzw. dieser modulartig realisierenden Szintillatorbaugruppen), dergestalt, dass eine (relativ) dicke Szintillatorbaugruppe im Hinblick auf auftreffende Röntgenstrahlung eine hohe Effizienz in der Umsetzung in (dann nachfolgend zu detektierende) Photonen sichtbaren Lichts aufweist, dagegen sorgt jedoch diese Dicke für zusätzliche Unschärfe. Im Rahmen der Erfindung wird jedoch diese Unschärfeeigenschaft, durch die zur Auswertung herangezogenen Pixel der effektiven Pixeldichte, insoweit relativiert, als eine Unschärfe in der Größenordnung der effektiven Pixeldichte tolerabel und damit akzeptabel ist, da ja eine größere Auflösung nicht erfolgt (und gemäß der Erfindung auch nicht erforderlich ist). Insoweit gestattet es die vorliegende Erfindung durch Variation bzw. Austausch der Szintillatorbaugruppen, vorteilhaft die Effizienz der Röntgenstrahlenwandlung zu optimieren, mit den wiederum damit verbundenen vorteilhaften Wirkungen verkürzter Detektionszeiten und damit beschleunigter Vermessungsprozesse. Zusätzliches Optimierungspotential verspricht eine Variation des Szintillatormaterials, alternativ oder zusätzlich zu der beschriebenen Dicke der jeweiligen Szintillatorbaugruppe, wobei auch diese Maßnahmen als Röntgenstrahlen-umwandlungsrelevante Unschärfe-Eigenschaften gemäß der Erfindung, wie auch die vorbeschriebene Dicke, gelten.

In der weiterbildungsgemäßen konstruktiven Realisierung dieses Gedankens bestehen, abhängig von jeweiligen konstruktiven und Bauraum-Gegebenheiten, nahezu beliebige Möglichkeiten, die Szintillatorbaugruppen austauschbar zu gestalten. Neben der pragmatischen Möglichkeit durch einfachen manuellen Zugriff einer Bedienperson bieten sich insbesondere mechanisierte bzw. automatisierte Handhabungsmittel an, welche Verschiebe-, Dreh- bzw. Verschwenkvorgänge für jeweils geeignet herangeführte bzw. gehaltene der Szintillatorbaugruppen realisieren.

Die vorliegende Erfindung ermöglicht dabei die Realisierung eines ersten sowie eines davon abweichenden zweiten Betriebszustands des industriellen Röntgen-Werkstückvermessungssystems, mit jeweils unterschiedlich eingerichteter bzw. eingestellter physikalischer bzw, effektiver Pixeldichte sowie jeweils zugeordneter Szintillatorbaugruppe. Diese Betriebszustände lassen sich etwa durch einfaches Umrüsten bzw. Umkonfigurieren des Systems einstellen und damit bevorzugt an unterschiedlich dimensionierte Werkstücke anpassen. Das erfindungsgemäße Dimensionsmaß kann dabei entlang verschiedener Achsenrichtungen, insbesondere in einer Ebene parallel zu den Szintillatormitteln bzw. zur Lichtaustrittsfläche, erfassbar sein, wobei insbesondere eine unterschiedliche Querdimension günstig entsprechend verschiedenen Betriebszuständen zuzuordnen ist (nicht zuletzt als in einer dazu orthogonalen Vertikaldimension, insoweit achsparallel zu einen weiterbildungsgemäß vorteilhaften und bevorzugt höhenverstellbaren Drehteller der Werkstückträgermittel, mittels dieser Werkstückträgermittel zumindest abschnittsweise eine vertikale Positionsveränderung des aufliegenden Werkstücks erfolgen kann).

So sieht die vorliegende Erfindung in bevorzugter Ausgestaltung des industriellen Röntgen-Werkstückvermessungssystems vorteilhaft vor, für die jeweiligen Betriebszustände einen Abstand zwischen einer Drehachse der Werkstückträgermittel und den Szintillatormitteln (welche ja insoweit dann eine eingangsseitige Frontfläche der erfindungsgemäßen Röntgendetektormittel ausbilden) verschieden auszugestalten. Diesem liegt die erfindungsgemäße Erkenntnis zugrunde, dass, bei verschieden großen, jeweils in den verschiedenen Betriebszuständen zu vermessenden Werkstücken zum Herstellen eines jeweils potentiell kurzen Abstands zu den Röntgendetektormitteln in besonders geeigneter Weise der Abstand zwischen diesen Röntgendetektormitteln und den Werkstückträgermitteln variiert wird - wobei dies sowohl durch ein Einstellen (Verschieben) der Werkstückträgermittel, als auch durch eine analoge Ortsveränderung der Röntgendetektormittel (oder auch beider) geschehen kann.

Ergänzend oder alternativ ist es möglich, ein derartiges vorteilhaftes Abstandsmaß im Rahmen der Erfindung auch dadurch festzulegen, dass ein relevanter und gewünschter kurzer (kürzester) Abstand zwischen dem (jeweils zu vermessenden) Werkstück und den (wiederum die Eingangsseite der Röntgendetektormittel ausbildenden) Szintillatormittel bestimmt wird. Dies geschieht dadurch, dass um das Werkstück ein umhüllender, gedachter Zylinder (mit einer eigenen Zylinderdicke von null) gelegt wird, dessen Mantel dann zu den Szintillatorflächen diesen Abstand ausbildet. Vorteilhaft ist einerseits, dass dieser Abstand (wiederum für verschiedene Werkstücke) unterschiedlich sein kann, dieser kann jedoch auch gleich oder annähernd gleich ausgebildet sein. Besonders vorteilhaft ist es zudem, die beschriebene Positionierung durch Einstellung des Relativabstandes so vorzunehmen, dass mindestens einer dieser Mantelabstände (d.h. für mindestens einen der Betriebszustände) einen nicht-berührenden kleinsten Abstand zu den Szintillatormittel realisiert, mit anderen Worten, die eingangs zum Stand der Technik nachteilig beschriebenen Unschärfeeffekte bestmöglich verhindert.

Diese Maßnahmen bewirken dann in erfindungsgemäß und vorteilhaft weiterbildender Weise, dass eine Vergrößerung der erfindungsgemäß realisierten Röntgenstrecke, definiert als das Verhältnis des Durchmessers des das Werkstück umhüllenden, gedachten Zylinders, bezogen auf die zugehörige Erstreckung des projizierten Bildes an den Röntgendetektormitteln, genauer: an einer Strahleneingangsfläche des Szintillatormittels, kleiner als 1,5 ist, bevorzugt kleiner 1,2 beträgt. Gerade diese erfindungsgemäße Zielgröße des (im Vergleich zum Stand der Technik kleinen) Vergrößerungsfaktors trägt wiederum vorteilhaft dazu bei, die erfindungsgemäße Aufgabe zu lösen.

In der praktischen Realisierung der Erfindung mit dieser bevorzugten Ausgestaltung führt dies dann vorteilhaft dazu, dass sich ein Verhältnis des beschriebenen Mantelabstands bezogen auf einen Durchmesser des den Mantel beschreibenden Zylinders kleiner 1 ist, wobei in weiter vorteilhaften Ausgestaltungen zusätzlich dieses Maß deutlich kleiner als 1, weiter bevorzugt nämlich weniger als 0,3 oder gar kleiner 0,1 beträgt. Auf diese Weise lässt sich bevorzugt sicherstellen, dass sich, insbesondere in Abkehr vom aus dem Stand der Technik bekannten und etwa in Fig. 7 illustrierten Vorgehen, eine jeweils bauteilspezifische und auf eine jeweilige Vermessungssituation optimierte Bildgebung erzeugen lässt, welche einerseits die jeweils zur Verfügung stehenden beteiligten Komponenten (Szintillatormittel sowie optische Detektormittel) bestmöglich einsetzt, andererseits nachteilige Unschärfen und dergleichen Effekte vermeidet.

Im Rahmen der vorliegenden Erfindung wird dies zusätzlich unterstützt durch die erfindungsgemäße Maßnahme, den Röntgenbrennfleck erfindungsgemäß auszugestalten, nämlich dergestalt, dass die Fläche dieses Röntgenbrennflecks größer oder gleich dem sich aus dem Inversen der effektiven Pixeldichte ergebenden Flächenmaß ist. In der bevorzugten Ausgestaltung dieses Erfindungsaspekts ist zudem vorgesehen, die Fläche des Röntgenflecks so (gegenüber dem Stand der Technik) vergrößert auszubilden, dass diese mehr als das Fünffache, weiter bevorzugt sogar mehr als das Zehnfache des Pixelflächenmaßes beträgt; in der konkreten Realisierung im Rahmen üblicher Dimensionierungen des erfindungsgemäßen industriellen Röntgen-Werkstückvermessungssystems sorgt dies dafür, dass üblicherweise und bevorzugt die Brennfleckgröße > 50 µm, weiter bevorzugt > 150 µm und weiter bevorzugt gar > 300 µm beträgt.

Insbesondere eine derartige Weiterbildung ermöglicht es dann vorteilhaft (und wiederum in Abkehr von der systembedingten Leistungsbegrenzung des Vorgehens nach dem Stand der Technik gemäß Fig. 7), eine Röntgenleistung der Röntgenquelle gemäß der Erfindung vorzusehen, welche bevorzugt größer 50 W, weiter bevorzugt größer 200 W und weiter bevorzugt mehr als 500 W beträgt, alternativ oder ergänzend wäre die Energie der Röntgenquelle so einzurichten, dass diese größer 200 keV, weiter bevorzugt größer 230 keV beträgt. Generell günstig ist es, (in Ergänzung bzw. alternativ zu den vorgenannten Varianten) die Röntgenquelle so auszugestalten, dass diese als geschlossene Röhre ausgebildet ist.

Damit ermöglicht es die vorliegende Erfindung vorteilhaft, die Größe des Brennflecks der Röntgenquelle so einzurichten bzw. auszuwählen, dass eine sich daraus resultierende Unschärfe mit entsprechender Szintillatoreigenschaften bedingten Szintillatormittel-Unschärfe in Verbindung steht bzw. mit dieser abzugleichen ist, ebenso wie mit der (effektiven) Pixeldichte der optischen Detektormittel.

Eine weitere bevorzugte Ausführungsform der Erfindung sieht vor, die Lichtaustrittsfläche der Szintillatormittel von der Sensorauftrittsfläche der optischen Detektormittel räumlich zu beabstanden. Während zwar, wie vorbeschrieben, eine Realisierung der Erfindung durchaus auch eine Stapelung bzw. ein unmittelbares Aufeinanderfügen von Szintillatormitteln und optischen Detektormitteln vorsehen kann, stellt es gleichwohl eine besonders bevorzugte, flexible und variable Weiterbildung der Erfindung dar, durch den weiterbildungsgemäß vorgesehenen Abstand Raum für zwischenzuschaltende Lichtübertragungsmittel zu schaffen, welche dann durch die damit ermöglichten Projektionen, die erfassten bzw. zu detektierenden Dimensionen flexibel zueinander in Beziehung setzen können.

So ist es zunächst bevorzugt und vorteilhaft, die zwischengeschalteten Lichtübertragungsmittel als skalierend wirkende Bildprojektionsmittel auszugestalten, welche die aus der Lichtaustrittsfläche der Szintillatormittel austretenden Lichtstrahlen (eines dort abgebildeten Werkstücks) verkleinern und auf eine (z.B. mit einer Kamera realisierte) Sensorauftrittsfläche übertragen. Die weiterbildungsgemäßen Bildprojektionsmittel könnten dann etwa Objektive oder dergleichen die Skalierung realisierende Mittel (etwa auch sog. Fiberoptische Taper) zur Beeinflussung des geführten sichtbaren Lichts sein und in besonders bevorzugter Weise die Vorteile (industrieller) Kameratechnik ausnutzen.

Dies gilt dann insbesondere, wenn diese Kameramittel modulartig und geeignet arrangier- und austauschbar sind, wobei hier zusätzlich der Vorteil geschaffen wird, dass die erfindungsgemäßen optischen Detektormittel nicht lediglich eine einzelne derartige (Digital-) Kamera sein müssen, sondem auch eine Kameramehrzahl, entsprechend einem jeweiligen Detektionszweck, vorgesehen sein kann. Diese Lösungsvariante ermöglicht es dann nicht nur, verschiedene Teilflächen der (Szintillator-) Lichtaustrittsfläche jeweiligen Kameras zuzuordnen, auch lassen sich diese Kameras, ergänzend oder alternativ, in verschiedenen (physikalischen oder effektiven) Pixeldichten realisieren, sodass insoweit die Möglichkeiten einer optimierten Erfassung nahezu unbegrenzt sind. Dabei sind insbesondere Anpassungen (z.B. an veränderte Dimensionen bzw. Erstreckungen des Werkstücks, ergänzend oder alternativ veränderte Messerfordernisse für zu detektierende Fehlertoleranzen) sehr einfach und häufig auch durch ungeschultes Bedienpersonal zu realisieren, da ja in so einem Fall lediglich vorkonfigurierte Kameramodule geeignet zu positionieren und ggf. auszutauschen sind.

Eine Variante bzw. Alternative zur Realisierung der weiterbildungsgemäß im Rahmen der Erfindung vorgesehenen, skalierend wirkenden Bildprojektionsmittel besteht in dem Einsatz sogenannter faseroptischer Konen (auch häufig als fiberoptische Tapers bezeichnet). Derartige, üblicherweise bündelartig vorgesehene Anordnungen von jeweils eine Skalierung (üblicherweise Verkleinerung, aber auch Vergrößerung möglich) bewirkender Einzelfibern lassen eine Optimierung der Projektionsmittel insbesondere für ein feststehendes Skalierungsverhältnis zu, ermöglichen höchste Wirkungsgrade und sind besonders mechanisch stabil und störsicher in der Realisierung dieser weiterbildungsgemäßen Funktionalität.

Eine zusätzliche, ergänzend die Flexibilität und Variabilität des erfindungsgemäßen Systems verbessernde Weiterbildung der Erfindung sieht vor, Szintillatormittel und optische Detektormittel, bereits im Rahmen der Erfindung aufeinander optimiert, miteinander modulartig so auszugestalten, dass ein derartiges kombiniertes Modul geeignet wechselbar, weiter bevorzugt automatisiert wechselbar, ausgestaltet ist. Für eine derartige, im Komfort optimierte Lösung ist es dann wiederum günstig, geeignet vorkonfigurierte Digitalkameras zur Realisierung der optischen Detektormittel vorzusehen.

Im Rahmen der Realisierung der vorliegenden Erfindung ist es zwar möglich, die Werkstückträgermittel stationär und in der Relativposition zur Röntgenquelle bzw. zu den Röntgendetektormitteln invariant vorzusehen, bevorzugt ist es jedoch, auch eine derartige Achsenverstellbarkeit vorzusehen. Dies basiert auf dem Gedanken, dass es, in Abhängigkeit von jeweiligen Dimensions- und Materialeigenschaften eines zu vermessenden Werkstücks, durchaus vorteilhaft sein kann, insbesondere einen relevanten Abstand zu einer Eintrittsfläche der Szintillatormittel vorbestimmen und einstellen zu können, insbesondere auch zur Realisierung einer möglichst geringen Vergrößerung. Alternativ kann der Abstand von der Eintrittsfläche der Szintillatormittel zum Werkstück durch Verstellung der Szintillatormittel verändert bzw. eingestellt werden, wiederum ergänzend oder alternativ kann die Röntgenquelle entlang der Achse verstellbar ausgebildet sein.

Während die vorliegende Erfindung zunächst als die vorbeschriebenen Vorteile realisierendes System wirkt, ist es gleichwohl von der Erfindung umfasst, auch ein Betriebsverfahren vorzusehen, welches zwar besonders bevorzugt den Betrieb des erfindungsgemäßen Systems beschreibt, jedoch prinzipiell auch über dieses hinaus und unabhängig ein vorteilhaftes Vorgehen bei der industriellen Röntgenvermessung von Werkstücken liefern kann.

So ist es besonders bevorzugt und vorteilhaft, beim Betrieb des erfindungsgemäßen Systems bzw. bei der Durchführung des Systems in folgender Reihenfolge bzw. Abfolge der Schritte zu verfahren:
Nach einem Vorsehen des zu vermessenden Werkstücks auf den Werkstückträgermitteln (und ggf. einer weiterbildungsgemäß vorteilhaften Justage einer Relativposition der Werkstückträgermittel zu den Röntgendetektormitteln, in Abhängigkeit von einer Dimension des Werkstücks) werden die optischen Detektormittel (ggf. zusätzlich oder alternativ die Lichtübertragungsmittel) ausgewählt und eingerichtet, in Abhängigkeit von dem Dimensionsmaß des zu untersuchenden Werkstücks, sowie in Abhängigkeit von der Fläche des Röntgenflecks. Dies geschieht etwa dadurch, dass festgelegt wird, mit welcher effektiven Pixeldichte das Werkstück zu vermessen ist - einerseits im Hinblick auf eine gewünschte Auflösung, andererseits unter Vermeidung unnötiger Feinauflösung, welche für den jeweils benötigten Zweck dann nicht notwendig ist. Entsprechend der vorliegenden Erfindung geschieht dies dadurch, dass zunächst entsprechend der gewünschten effektiven Pixeldichte, die optischen Detektormittel geeignet eingestellt, eingerichtet, ausgetauscht bzw. (etwa durch Bündeln physikalischer Pixel) zur Auswertung vorbereitet werden.

Daraufhin werden die erfindungsgemäßen Szintillatormittel geeignet ausgewählt oder eingerichtet, insbesondere in Abhängigkeit von den optischen Detektormitteln bzw. der eingerichteten effektiven Pixeldichte: Wie vorstehend dargelegt, kann auch eine Optimierung der Szintillatormittel stattfinden, etwa durch geeignete Wahl einer Dicke und/oder eines Szintillatormaterials der Szintillatormittel, womit die gewünschte Unschärfeeigenschaft angepasst ist an die von den optischen Detektormitteln ausgewertete effektive Pixeldichte, wiederum dann mit entsprechender Auswirkung auf die notwendige Mess- bzw. Belichtungsdauer zur Feststellung des Lichtsignals.

Nach diesen Einstell- bzw. Einrichteschritten erfolgt dann das erfindungsgemäße Durchstrahlen des Werkstücks nach Aktivieren der Röntgenquelle, wobei die Bildpixel der optischen Detektormitteln mit der effektiven Pixeldichte die optimierte Erfassung und Auswertung des Röntgenbildes gestatten. Im Fall einer tomografischen Vermessung erfolgt dann in einer üblichen Weise das Erfassen einer entsprechenden (z.B. durch Verdrehen der Werkstückträgermittel variierten) Mehrzahl von Einzelbildern und entsprechendes dreidimensionales (und ansonsten bekanntes) Verrechnen dieser in die gewünschte dreidimensionale Abbildung.

Zusätzlich Schutz im Rahmen der Erfindung wird beansprucht für ein Verfahren zum Betreiben des industriellen Röntgen-Werkstückvermessungssystem, in bevorzugter Realisierung als industrielles Röntgentomografiesystem, mit den im unabhängigen Verfahrensanspruch angegebenen Schritten. Auch diese werden durch die abhängigen Verfahrensansprüche weitergebildet, wobei im Rahmen der vorliegenden Offenbarung auch sämtliche, aus der vorliegenden System-Erfindungsbeschreibung erkennbaren Verfahrensschritte als zur Verfahrenserfindung gehörig offenbart gelten sollen (auch betreffend den ersten und den zweiten Betriebszustand) und insoweit vorteilhaft das erfindungsgemäße Verfahren weiterbilden.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine Perspektivansicht eines industriellen Röntgen-Werkstückvermessungssystems als industrielles Röntgentomografiesystem außerhalb des Schutzumfangs der Ansprüche

- Fig. 2: ein Prinzipdiagramm zum Verdeutlichen eines bevorzugten Messverfahrens bzw. Messprinzips gemäß Fig. 1, mit jeweils nah an die Szintillatormittel herangerücktem zu vermessendem Werkstück,
- Fig. 3: eine Perspektivansicht des industriellen Röntgentomografiesystems gemäß einem Ausführungsbeispiel der Erfindung;
- Fig. 4: eine Perspektivansicht des industriellen Röntgentomografiesystems gemäß einem weiteren Ausführungsbeispiel der Erfindung;
- Fig. 5: eine Perspektivansicht des industriellen Röntgentomografiesystems gemäß einem weiteren Ausführungsbeispiel der Erfindung;
- Fig. 6: in Teildarstellungen der Fig. 6A/B zwei mögliche Varianten zur weiteren Ausgestaltung einer (ggf. perspektiv-korrigierten) Umlenktechnologie im optischen Strahlengang zwischen den Szintillatormitteln und den optischen Bilderfassungsmitteln als weitere Ausgestaltungen bzw. Varianten der Erfindung und
- Fig. 7: in der Ausgestaltung in Form von Teilbildern gemäß Fig. 7A/B eine Darstellung zum Verdeutlichen prinzipieller Vorgehensweisen und damit verbundener Nachteile aus dem gattungsbildenden Stand der Technik.

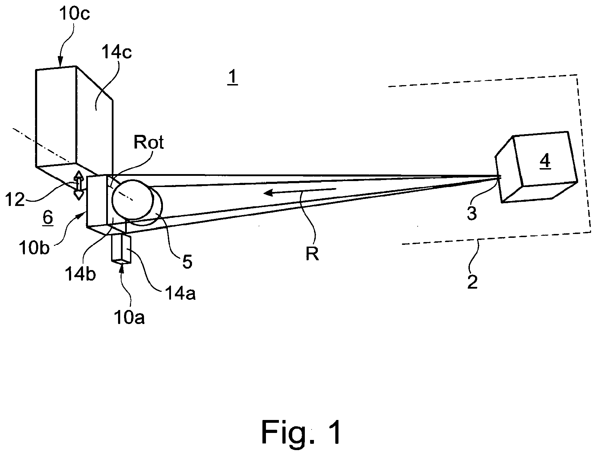

Die Fig. 1 zeigt in schematischer Perspektivansicht eines Röntgen-Werkstückvermessungssystems 1 als industrielles Röntgentomografiesystem. Eine einen Röntgenbrennfleck 3 einer typischen Brennfleckgröße von 200 µm und mit einer Röntgenleistung von ca. 300 W ausgebildete Röntgenquelle 4 begrenzt einends einen Röntgenstrahlengang in einem (schematisch und partiell dargestellten) Röntgenschutzgehäuse 2. Gezeigt ist, wie entlang einer Röntgenstrahlen-Ausbreitungsrichtung R die emittierten Röntgenstrahlen - konus- bzw. fächerartig aufgeweitet - auf anderenends-endseitig des Gehäuses 2 vorgesehene Röntgendetektormittel 6 auftreffen. In diesem Strahlengang eingebracht ist ein Werkstück 5, welches schematisch anhand eines dieses berührend umschließenden, gedachten Zylinders, insoweit dann beschreibend eine umfangsseitige Mantelfläche, dargestellt ist. Das Werkstück ist zudem aufgenommen bzw. gehalten auf (in der Fig. nicht gezeigten) Werkstückträgermitteln, welche als typische (und hier zusätzlich höhenverstellbar ausgebildete) Drehtelleranordnung ausgestaltet sind. Die Kennzeichnung Rot beschreibt die (schematisch gezeigte) Rotationsachse des Drehtellers, wobei zur Vereinfachung angenommen wird, dass im gezeigten Ausführungsbeispiel das Werkstück 5 auf diesem koaxial zu dem Umfangszylinder aufliegt.

Gezeigt ist ferner in der Fig. 1, wie die Röntgendetektormittel in Form von drei (jeweils in dem Strahlengang verschiebbar ausgebildeten) Modulen realisiert sind, nämlich in Form eines ersten (noch außerhalb des Strahlengangs befindlichen) kleinsten Moduls 10a, eines zweiten, im Strahlengang befindlichen und zum Vermessen des Werkstücks 5 ausgerichteten Moduls 10b sowie eines dritten, wiederum außerhalb des Strahlengangs befindlichen Moduls 10c. Der schematisch gezeigte Doppelpfeil 12 in Fig. 1 verdeutlicht insoweit die Möglichkeit, die jeweiligen Module 10a bis 10c, zum Realisieren des erfindungsgemäßen ersten und zweiten (und weiteren) Betriebszustands, geeignet durch Verschieben oder dergleichen Austauschbewegung in den Strahlengang zu verbringen.

In der Fig. 1 nicht im Detail gezeigt ist eine jeweils modulspezifische (und damit auch betriebszustandsspezifische) Zuordnung der Funktionskomponenten innerhalb der Module 10a bis 10c zum Realisieren der Funktionalität als Röntgendetektormittel: Eingangsseitig und insoweit zum Realisieren einer Röntgeneingangsfläche 14a bzw. 14b bzw.

14c ist in jedem der Module eine Szintillatoranordnung vorgesehen, welche in ansonsten bekannter Weise die auftreffenden Röntgenstrahlen der Quelle 4 in sichtbares Licht umwandelt. Dies geschieht durch (hier unmittelbar und berührend) den Szintillatormitteln nachgeordnete optische Detektormittel, welche, matrixartig und als Anordnung aus üblichen CMOS-Bilderfassungspixeln, dann das (in der Fig. 1 nicht erkennbare) umgewandelte Röntgenbild an der (Szintillator-) Lichtaustrittsfläche, eintretend in die unmittelbar folgende (optische) Sensorauftrittsfläche, in übliche elektronische Signale umwandeln.

Bei Änderung des Betriebszustandes (entsprechend Wechsel der Röntgendetektormittel 10a, 10b, 10c) wird neben einer Änderung der Pixeldichte und der Szintillatorunschärfeeigenschaft der Abstand zwischen Szintillator und Bauteil bzw. Drehachse durch Querverschiebung entsprechend dem Doppelpfeil 12 angepasst (optimiert).

Erfindungsgemäß vorteilhaft ermöglicht damit das nicht erfahrungsgemäße Beispiel der Fig. 1, jedem der Module ein individuell insbesondere auf die jeweils zu vermessende Werkstückdimension (Dimensionsmaß), etwa verkörpert durch den erkennbaren Zylinderdurchmesser, angepasste Konfiguration aus Szintillatormittel, diesen nachgeordneten optischen Detektormitteln sowie spezifischem Abstand des Werkstücks zum Szintillator zuzuordnen - der erfindungsgemäße Wechsel vom ersten Betriebsmodus in den zweiten Betriebsmodus (und ggf. in dann weitere Betriebsmodi) erfolgt entsprechend etwa einer Bewegung 12 durch Verschieben der jeweiligen (hier geeignet vorkonfigurierten) Module 10a bis 10c, und es lässt sich für jedes der Werkstücke ein optimieter (kürzerer) Abstand einrichten.

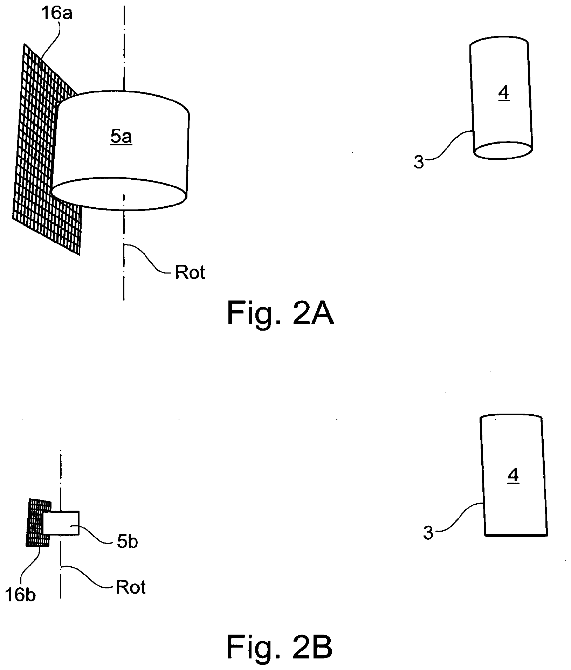

Die Fig. 2 mit Teildarstellungen (a) und (b) verdeutlicht die vorteilhafte Wirkung des Vorgehens etwa gemäß Beispiel der Fig. 1; in den Teildarstellungen lediglich gezeigt ist ein jeweiliges, größenverschiedenes Werkstück 5a bzw. 5b und diesem zugeordnet die Sensorauftrittsfläche des (in den Modulen 10a bis 10c enthaltenen) optischen Bildsensors; die zwischengeordneten Szintillatormittel sind aus Gründen der Vereinfachung der Darstellung nicht gezeigt. Erkennbar wird aus der unmittelbaren Gegenüberstellung von Teilbild (a) zu Teilbild (b) in Fig. 2, dass, abhängig von einem Dimensionsmaß (hier sowohl die Zylinderweite als auch eine Zylinderhöhe entlang der Rotationsachse Rot), die physikalische Pixeldichte der Lichtaustrittsfläche 16 (als 16a für Teilfigur a bzw. 16b für Teilfigur b) unterschiedlich groß ist, zusätzlich ist die eigentliche Fläche unterschiedlich groß ausgestaltet. In Verbindung mit einem jeweils an die dadurch erreichten optischen Auflösungsbedingungen der zugehörigen optischen Sensormittel angepassten (nicht gezeigten) Szintillatormitteln für diese Zustände wird deutlich, dass eine an das Werkstück optimal angepasste Vermessung erfolgen kann, unter Minimierung sämtlicher vorbeschriebener negativer Effekte. Deutlich wird ferner, dass, im Gegensatz zum vorbeschriebenen Stand der Technik etwa im Zusammenhang mit Fig. 7, zwar auch eine relative Abstandsveränderung zwischen den Röntgendetektormitteln einerseits (Module 10a bis 10c in Fig.1, dazu Flächen 16a bzw. 16b innerhalb dieser Module in Fig. 2) relativ zu den Werkstücken erfolgt, diese jedoch auch eine abstandsgemäße Optimierung ermöglichen: So ist etwa erkennbar der Drehachsenabstand Rot in Teilfigur (b) von Fig. 2, bei kleinerem Werkstück, geringer als der Relativabstand bei Teilfigur (a), insoweit umgekehrt zum aufgefächerten Projektionsprinzip der Fig. 7. Gerade aber das aus Fig. 2 erkennbare Prinzip ermöglicht die gewünschte optimierte bestmögliche Bildqualität für eine jeweilige Werkstückdimension.

Es versteht sich von selbst, dass die (lediglich schematisch anhand des Pfeils 12 dargestellte) Verschiebbarkeit der Einzelmodule auf beliebige Art und Weise eine werkstücksdimensions-abhängige Zuordnung (von jeweiligem Modul für einen jeweiligen Betriebszustand) zu einem jeweils zu vermessenden Werkstück vorsehen kann, dies kann sowohl manuell, als auch durch Austauschen, automatisiert oder teilautomatisiert, erfolgen. Auch verdeutlicht die Gegenüberstellung der Teilfiguren (a) und (b) in Fig. 2, wie die jeweiligen Betriebszustände verschiedene physikalische Pixeldichten (verkörpert durch die matrixartige Struktur der Sensorauftrittsflächen 16a mit exemplarisch 100 µm Pixelweite (d.h. 10 Pixel/mm) für einen angenommenen Zylinderdurchmesser von 300 mm des Werkstücks 5a sowie mit exemplarisch 10 µm Pixelweite (d.h. 100 Pixel/mm) des Sensors 16b für den Zylinderdurchmesser 30 mm des Werkstücks 5b) aufweisen. In der Annahme, dass diese Bildpixel in dieser physikalischen Form üblicherweise einzeln erfasst und aufbereitet werden, wäre dann die resultierende effektive Pixeldichte gleich dieser physikalischen Pixeldichte (bei Teilfigur (b) entsprechend höher als bei Teilfigur (a)). Für den Fall, dass etwa aufgrund einer Bündelung bzw. gruppenweisen elektronischen Erfassung der erkennbaren Bildpixel eine Variation der Auflösung erfolgt (durch sogenanntes Binning), würde sich dann die im elektronischen, aus dem Auslesen der CMOS-Sensorik resultierenden Bildsignal relativ zur physischen Pixeldichte eine entsprechend größere effektive Pixeldichte ergeben.

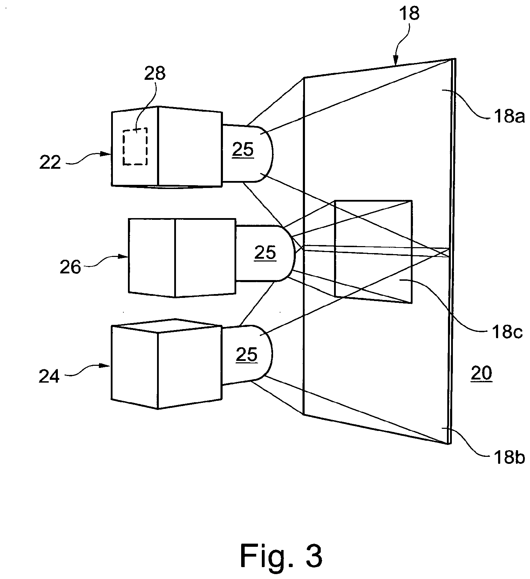

Das weitere Ausführungsbeispiel der Fig. 3 verdeutlicht eine alternative Vorgehensweise insbesondere zur Realisierung der erfindungsgemäßen Röntgendetektormittel, wobei diese Prinzipdarstellung auch selbst wiederum zahlreiche Varianten und Betriebsmodi gestattet. Gezeigt ist zunächst in Form des Bezugszeichens 18 eine Lichtaustrittsfläche an einem (bezogen auf die nicht gezeigte Röntgenquelle) rückwärtigen Ende der rechteckig-scheibenförmig dargestellten Szintillatormittel 20. Zur Realisierung der diesen optisch nachgeschalteten Detektormittel im Rahmen der Erfindung sind drei Digitalkamera-Anordnungen 22, 24, 26 vorgesehen, welche auf die Lichtaustrittsfläche 18 gerichtet und so positioniert sind, dass die beiden äußeren Digitalkamera-Anordnungen 22, 24 eine obere Teilfläche 18a bzw. eine untere Teilfläche 18b der Lichtaustrittsfläche erfassen. Genauer gesagt ist jede dieser Digitalkamera-Anordnungen 22, 24 so ausgebildet und angeordnet, dass schematisch gezeigte Objektivbaugruppen 25 der Kameramodule die jeweiligen Teilflächen 18a, 18b auf innenliegende Bilddetektoren 28 (lediglich exemplarisch für Kameramodul 22 gezeigt) projizieren. Die Detektorauflösung dieser Baugruppe 28 bestimmt dann wiederum die physikalische Pixeldichte und damit Bildauflösung der Kameramittel und bildet gleichermaßen die jeweilige Sensorauftrittsfläche.

Zusätzlich ist in der Fig. 3 gezeigt, wie das in der Anordnung der Kameramodule mittlere Kameramodul 26 auf eine innere Teilfläche 18c der Lichtaustrittsfläche 18 der Szintillatormittel gerichtet ist, und zwar mit einer gegenüber den Teilflächen 18a, 18b verringerten, dafür zentrisch angeordneten Flächengröße.

Die, wie in Fig. 3 gezeigt, ausgebildete Anordnung lässt sich nunmehr im Rahmen möglicher Realisierungen der Erfindung dergestalt betreiben, dass etwa im ersten Betriebsmodus die außenliegenden Kameramodule 22, 24 ihre jeweiligen Teilflächen 18a, 18b (und damit zum Erfassen der Gesamtfläche 18) abdecken und entsprechend dort durch die Szintillatormittel erzeugte Bilder optischen Lichts (als Reaktion auf nicht gezeigte Röntgeneinstrahlung in die Szintillatormittel) in entsprechend auswertbare Digitalbilder umsetzen. Eine typische Anwendung dieses ersten Betriebsmodus wäre ein (nicht gezeigtes) Werkstück, welches, geeignet vor den Szintillatormitteln platziert, zu einer Röntgenstrahlungsabdeckung über beide Teilflächen führt. Dagegen wäre etwa (isoliert) das Kameramodul 26 betreibbar, um entweder ein entsprechend kleineres Werkstück zu vermessen, welches sich geeignet auf den Teilbereich 18c abbildet, alternativ kann das Kameramodul 26 auch benutzt werden, um im Rahmen eines (relativ dazu großen) Werkstücks lediglich einen die Teilfläche 18c betreffenden Teilbereich dieses Werkstücks zu vermessen. Auch sieht die bevorzugte Ausgestaltung der Erfindung vor, dass entweder die Teilfläche 18c des Szintillators 20 eine an diesen Betriebsmodus angepasste Szintillatoreigenschaft aufweist (also etwa, relativ zum umgebenden Szintillator, dünner ausgebildet ist), alternativ sieht das in Fig. 3 gezeigte Ausführungsbeispiel die Möglichkeit vor, die Szintillator-Gesamtanordnung - ganz oder teilflächig - gegen einen anderen Szintillator mit entsprechend anderer Röntgen-Unschärfeeigenschaft auszutauschen.

Auch ist es zur Realisierung von Ausführungsbeispielen der Fig. 3 nicht notwendig, dass sämtliche der Kameramodule optische Detektormittel 28 mit übereinstimmender physikalischer Pixeldichte aufweisen; auch diese ist variabel, entweder durch geeignete (Vor-) Konfiguration der jeweils einzusetzenden Kameramodule 22 bis 26, alternativ wiederum durch das vorbeschriebene gruppenweise Auslesen von Sensoren hoher Pixeldichte mit dem Zweck einer Realisierung einer entsprechend niedrigeren effektiven Pixeldichte, wiederum jeweils in Abhängigkeit von den zugeordneten Szintillatormitteln für einen jeweiligen Betriebsmodus.

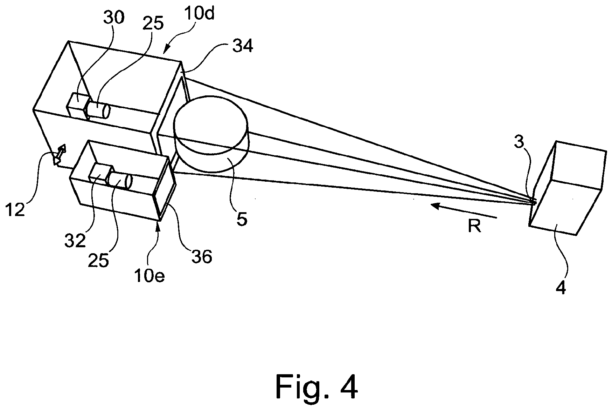

Das Ausführungsbeispiel der Fig. 4 (wiederum ermöglichend eine Vielzahl von Varianten) nimmt Grundgedanken des ersten bzw. zweiten Ausführungsbeispiels auf und zeigt insbesondere eine Möglichkeit, wie die in Fig. 1 dargestellten Module alternativ zu einem unmittelbaren berührenden Schichten von Szintillator- bzw. optischer Detektormatrix (Fig. 1) ausgestaltet werden können: Kameramodule 30 bzw. 32 bilden die optischen Detektormittel innerhalb von einer (wiederum entlang Pfeilrichtung 12 austausch- bzw. bewegbaren) modulartigen Röntgendetektormitteln 10d und 10e. Deutlich wird, dass die Kameramodule 30 bzw. 32, entsprechend der zu realisierenden optischen Bildvergrößerung bzw. dem gewünschten Abstand zu den an den Modulen front- bzw. eingangsseitig gebildeten Szintillatormitteln 34 bzw. 36, unterschiedlich positioniert sind. Auch diese Szintillatormittel 34 bzw. 36 sind der jeweiligen physikalischen bzw. effektiven Pixeldichte entsprechend angepasst und ermöglichen so die erfindungsgemäß bestmögliche Anpassung an das zu vermessende Werkstück (genauer: dessen Dimensionsmaß). Erkennbar wird zudem, dass, je nach Positionierung, beide Module 10d bzw. 10e unterschiedliche Abstände zu einer (nicht gezeigten) Drehachse eines als Drehteller ausgebildeten Werkstückträgers einnehmen können.

Wie auch bei den vorbeschriebenen Ausführungsbeispielen ist hier der Brennfleck, insbesondere im Vergleich zum eingangsseitigen Stand der Technik, groß ausgestaltet und folgt etwa der exemplarischen Dimensionierung in der Fig. 1.

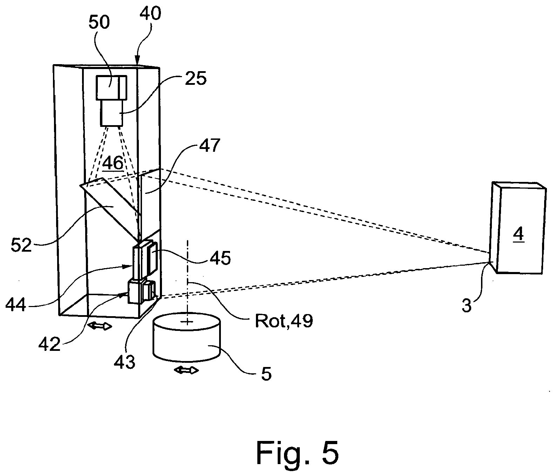

Das Ausführungsbeispiel der Fig. 5 zeigt weitere Varianten der Erfindung.

Gezeigt ist zunächst ein Röntgendetektorgehäuse 40, welches verschiedene Röntgendetektorvarianten - hier wiederum verschiedenen möglichen Werkstückdimensionen zugeordnet - realisieren kann. Ausgewählt bzw. angefahren werden diese Varianten durch Werkstückträgermittel (nicht gezeigt), welche das Werkstück 5 entlang einer Drehteller-Rotationsachse Rot verstellen bzw. verschieben können, und zwar von einer ersten, unteren Röntgendetektoranordnung 42 mit einer zugeordneten Szintillator-Eingangsfläche 43 über eine (wiederum entlang der Achsenrichtung) mittleren Röntgendetektoranordnung 44 (mit Eingangsfläche 45) bis zu einer oberen Röntgendetektoranordnung 46 mit Eingangsfläche 47. Insbesondere die Röntgendetektoranordnungen 42 bzw. 44 weisen jeweils aufeinanderliegende Szintillatormittel sowie (optisch) nachgeschaltete optische Detektormittel auf, wobei jedoch in beiden Fällen Lichtübertragungsmittel vorgesehen sind, nämlich in Form von den optischen Strahlengang beeinflussenden fiberoptischen Plate- bzw. Taper-Anordnungen, wobei die Anordnung 44 exemplarisch ein fiberoptisches Plate und die Anordnung 42 einen Taper erhält. Beide Röntgendetektoranordnungen 42, 44 sind, bezogen auf unterschiedliche Werkstückdimensionen, zueinander verschieden ausgestaltet und realisieren damit den ersten bzw. zweiten Betriebsmodus, dergestalt, dass die jeweilige Kombination aus Szintillator und optischem Detektor für das jeweilige Werkstück-Dimensionsmaß optimiert ist (und die zwischenliegenden optischen Übertragungsmittel für die jeweils notwendige Übertragung sorgen). Dagegen sieht die dritte Röntgendetektoreinheit im Strahlengang zwischen den die Eintrittsfläche 47 bildenden Szintillatormitteln und den hier als Kameramodul 50 realisierten optischen Detektormitteln eine Umlenkung des optischen Strahlengangs in Form eines geeigneten Umlenkspiegels 52 vor, sodass, einerseits, eine gegenüber den Einheiten 42, 44 (bzw. den dort zugeordneten Flächen 43, 45) deutlich vergrößerte Eintrittsfläche realisiert ist und entsprechend das Vermessen eines größeren Werkstücks gestattet, andererseits durch die Umlenkung und innerhalb des Gehäuses 40 nicht etwa eine rückwärtige Abmessungs-Vergrößerung notwendig ist, vielmehr die Gesamtanordnung nach wie vor kompakt und platzsparend (und im Hinblick auf die Röntgen-Abschirmungsbedingungen auch gewichtssparend) optimiert werden kann.

Auch hier ist die Seite der Röntgenquelle im Hinblick auf die Brennfleckdimensionierung groß und etwa analog dem Vorgehen beim ersten Ausführungsbeispiel ausgestaltet.

Im Betrieb gestattet es nunmehr das gezeigte Ausführungsbeispiel der Fig. 5, durch (vertikales) Verfahren des zu vermessenden Werkstücks entlang der Achse 45 und/oder Positionieren auf dem Drehtisch und entsprechend einer jeweiligen Werkstückdimensionierung eine dafür optimale Vermessungsposition gegenüber der jeweiligen Röntgendetektoreinheit auszuwählen. Da zudem, wie in der Fig. 5 erkennbar, die Einheiten 42 bis 46, bezogen auf die Achse 45, unterschiedliche Zustände ausbilden, ist auch auf diesem Wege eine Optimierung gestattet.

Ein weiterer Vorteil der gezeigten Umlenkung der optischen Strahlung durch den Spiegel 52 besteht darin, dass die Kamera (röntgenstrahlengeschützt) außerhalb des Röntgenkonus vorgesehen ist. Das Ausführungsbeispiel ermöglicht weiterhin die Anpassung bzw. Optimierung des Abstandes der Drehachse vom jeweiligen Szintillator entsprechend der Erfindung durch Verschieben der Detektoreinheit oder des Drehtisches (Doppelpfeile in Fig. 5).

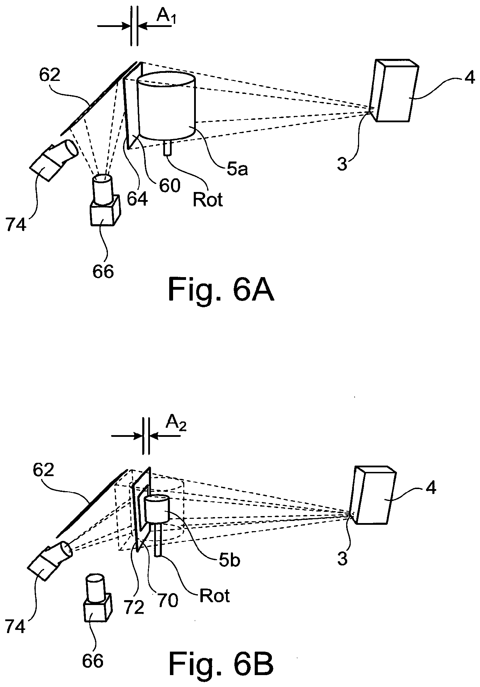

Weitere mögliche Varianten der Erfindung zeigen die in den Fig. 6A bzw.

6B gezeigten Ausführungsbeispiele.

So zeigt die Fig. 6 nämlich, wie das anhand der Röntgendetektoreinheit 46 in Fig. 5 illustrierte Umlenkprinzip variiert bzw. substituiert werden kann, abhängig von wiederum den Vermessungserfordernissen, welche ein jeweiliges Werkstück anbietet: So zeigt das Ausführungsbeispiel der Fig. 6A, wie ein vergleichsweise großes Werkstück 5a (gezeigt ist zusätzlich ein Achsenabschnitt Rot der Werkstückträgermittel) in einem ersten optimierten (minimierten) Abstand A₁ vor einer Szintillatoreintrittsfläche 60 positioniert ist. Ein Umlenkspiegel 62 würde dann das auf der Lichtaustrittsfläche 64 erscheinende optische Bild auf ein erstes Kameramodul 66 projizieren, welches insbesondere im Hinblick auf den darin enthaltenen (nicht im Detail gezeigten) optischen Detektor im Hinblick auf die Pixeldichte so eingerichtet ist, dass das nahezu vollflächige Röntgenbild auf der Fläche 6 erfasst und umgesetzt werden kann. Dagegen ermöglicht es die Anordnung der Fig. 6, im Fall eines kleineren Werkstücks 5b in Teilbild B, wie lediglich eine Teilfläche 70 von gegenüber der Fig. 6A ausgetauschten, angepassten Szintillatormitteln vom Röntgenstrahlengang erreicht wird. Das daraus vom (ausgetauschten) Szintillator erzeugte Bild auf der Lichtaustrittsfläche 72 wird aufgenommen von einem zweiten Kameramodul 74, welches, ohne Nutzung des Umlenkspiegels 62, gleichwohl mit optischem Winkelausgleich (unter Nutzung des sogenannten Scheimpflug-Prinzips) dann die Umsetzung in das elektronische Bildsignal bewirkt. Wiederum entsprechend den Erfordernissen an das Vermessen des kleineren Werkstück 5b, sind die im Kameramodul 74 gezeigten optischen Detektormittel hinsichtlich ihrer physikalischen bzw. effektiven Pixeldichte geeignet eingestellt und insbesondere auch zusammen mit dem (hierfür ausgetauschten) Szintillator optimiert. Erkennbar ist zusätzlich, wie, gegenüber dem Abstand A₁ für Werkstück 5a in Fig. 6A, in der Fig. 6B ein, entsprechend dem kleineren Werkstück 5b, optimierter (mininierter) Abstand A₂ eingerichtet ist - etwa durch geeignetes Verschieben der Werkstückträgerachse Rot, ergänzend oder alternativ durch die Ausgestaltung des (ohnehin ausgetauschten) Szintillators. Entsprechend kann die Anpassung des Abstands auch durch eine Ortsveränderung des (ohnehin ausgetauschten) Szintillators bei unterveränderter Drehachsenposition erfolgen Ein weiterer Vorteil der Umlenkung der optischen Strahlung durch Spiegel und das Scheimpflug-Prinzip besteht darin, dass die Kamera(s) röntgenstrahlengeschützt außerhalb des Röntgenkonus vorgesehen sind

Auch wird aus der Gesamtdarstellung jeweils deutlich, dass, nicht zuletzt durch das Zusammenwirken von Umlenkspiegel 62 einerseits und Perspektive-korrigierendem Kameramodul 74 andererseits, eine bessere Kompaktheit der Gesamtanordnung gegenüber rein linearen Anordnungen erreichbar ist.

Sämtliche vorbeschriebene Ausführungsbeispiele, jeweils für sich oder in beliebiger Kombination der darin gezeigten Varianten, sind durch zusätzliche, nicht in den Figuren gezeigte Möglichkeiten ergänz- oder variierbar, im Rahmen der Erfindung die optischen Detektormittel (mit ihren an eine jeweilige Vermessungssituation gemäß erstem bzw. zweitem Betriebsverfahren eingerichteter optischer bzw. effektiver Pixeldichte) an die Eigenschaften der jeweils zugeordneten Szintillatormittel anzupassen. Zusätzlich haben die vorbeschriebenen Ausführungsbeispiele verdeutlicht, wie insbesondere auch eine Optimierung der Abstände der jeweiligen Werkstücke (bzw. der diese aufnehmenden Werkstückträgermittel) im Bezug auf die Szintillatormittel (bzw. die Röntgendetektormittel) erfolgen kann, dergestalt, dass die erreichte signifikante Verkürzung dieses Abstandes, ohne Rücksicht auf Projektionserfordernisse wie aus dem Stand der Technik, die Belichtungszeit, etwaige, durch Röntgenquelle (z.B. Drift, thermische Effekte oder Instabilitäten) bedingte Probleme, die erreichbaren Geräte- bzw. Systemdimensionen sowie die Aufnahme- und Bildqualität signifikant verbessern kann. Damit wird nämlich diese Bildqualität im Rahmen der Erfindung situationsabhängig (also abhängig von dem jeweils konkret eingerichteten ersten bzw. zweiten bzw. weiteren Betriebsmodus) und ist nicht mehr, wie noch im Stand der Technik analog Fig. 7 diskutiert, abhängig von einer Positionierung eines Werkstücks (mit entsprechender Größe) im Strahlengang bei ansonsten invarianter Messtechnologie. Es skaliert somit die gewünschte und erreichte Auflösung nicht mehr mit der Werkstückgröße, es können auch große Werkstücke mit hoher Auflösung erfasst werden, und es ergeben sich im Hinblick auf erforderliche Systemabmessungen kompaktere Geräte. Nicht zuletzt ergibt sich durch den Einsatz erfindungsgemäßer Röntgenquellen mit größerem Brennfleck (und geschlossener Bauart) der zusätzliche Vorteil von Dauerstabilität und Wartungsarmut.

Es steht damit zu erwarten, dass die industrielle Röntgen-Werkstückvermessungstechnologie durch die vorliegende Erfindung in völlig neue Vermessungsdimensionen und Genauigkeiten vordringen kann, damit insbesondere auch den Erfordernissen höchst komplexer Vermessungsbedingungen, wie sie etwa bei dreidimensionalen und schichtweisen Fertigungstechnologien sowie Kontext von Industrie 4.0-Bedingungen auftreten. Gleichwohl ist die vorliegende Erfindung nicht auf derartige bevorzugte Verwendungen beschränkt, sondern eignet sich prinzipiell für jeglichen Anwendungszweck eines industriellen Werkstückvermessens, bei welchem situationsspezifische Genauigkeit mit bestmöglicher Bildqualität zu kombinieren ist.

## Patentansprüche

1. Industrielles Röntgen-Werkstückvermessungssystem, insbesondere industrielles Röntgentomografiesystem, mit
einer in einem Röntgenschutzgehäuse (2) angeordneten, einen Röntgenbrennfleck (3) aufweisenden Röntgenquelle (4),
in dem Röntgenschutzgehäuse angeordneten, bevorzugt zur Durchführung einer Drehbewegung ausgebildeten Werkstückträgermitteln zur Aufnahme eines zu untersuchenden nicht-medizinischen Werkstücks (5) und
am und/oder im Röntgenschutzgehäuse vorgesehenen, zum Erfassen eines auf den Werkstückträgermitteln gehaltenen Werkstücks durchstrahlenden Röntgenstrahls der Röntgenquelle ausgebildeten Röntgendetektormitteln (10a, 10b, 10c),
denen elektronische Auswertemittel, insbesondere zur Fehlerauswertung eines von den Röntgendetektormitteln erzeugten Röntgenbildes des zu untersuchenden Werkstücks, nachschaltbar sind,
wobei die Röntgendetektormittel Szintillatormittel (20) zur Umwandlung auftreffender Röntgenstrahlen in sichtbares Licht an einer Lichtaustrittsfläche (18)
und diesen optisch nachgeschaltete optische Detektormittel (28) umfassen, die eine Mehrzahl von in regelmäßigen Abständen zueinander benachbart angeordneten, eine gemeinsame Sensorauftrittsfläche ausbildenden Bildpixeln in einer physikalischen Pixeldichte umfassen,
wobei die Bildpixel das mittels der Szintillatormittel erzeugte sichtbare Licht zur elektronischen Auswertung mit einer effektiven Pixeldichte erfassen,
dass die optischen Detektormittel so ausgebildet sind, dass die physikalische und/oder die effektive Pixeldichte, insbesondere in Abhängigkeit von einem Dimensionsmaß des zu untersuchenden Werkstücks, bei einem Einstellen, Einrichten, Austauschen und/oder Auswerten der optischen Detektormittel vorbestimmt veränderbar ist und/oder
bei einem Einstellen, Einrichten, Austauschen und/oder Auswerten der optischen Detektormittel ein Verhältnis der Lichtaustrittsfläche bezogen auf die Sensorauftrittsfläche ungleich 1 und/oder veränderbar ist
**dadurch gekennzeichnet, dass**
eine die Szintillatormittel realisierende erste Szintillatorbaugruppe gegen eine sich in einer Röntgenstrahlen-umwandlungsrelevanten Unschärfe-Eigenschaft von der ersten Szintillatorbaugruppe unterscheidende zweite Szintillatorbaugruppe austauschbar ausgebildet ist, und dass der für einen Röntgenstrahlungsaustritt aus der Röntgenquelle wirksame Röntgenbrennfleck so dimensioniert und eingerichtet ist, dass die Fläche des Röntgenbrennflecks größer oder gleich einem sich aus dem Inversen der effektiven Pixeldichte ergebenden Pixelflächenmaß ist,
wobei das industrielle Röntgen-Werkstückvermessungssystem so ausgebildet ist, dass es durch das Einstellen, Einrichten, Austauschen und/oder Auswerten der optischen Detektormittel von einem ersten Betriebszustand mit einer ersten physikalischen und/oder effektiven Pixeldichte in einen zweiten Betriebszustand mit einer von der ersten verschiedenen zweiten physikalischen und/oder effektiven Pixeldichte überführbar ist,
und wobei dem ersten Betriebszustand die erste und dem zweiten Betriebszustand die zweite Szintillatorbaugruppe zugeordnet ist.

2. Industrielles Röntgen-Werkstückvermessungssystem, insbesondere industrielles Röntgentomografiesystem, nach Anspruch 1, **dadurch gekennzeichnet, dass** die Fläche des Röntgenbrennflecks (3) mehr als das fünffache, bevorzugt mehr als das zehnfache, des Pixelflächenmaßes beträgt und/oder
eine Brennfleckgröße der Röntgenquelle > 50 µm, bevorzugt > 150 µm, weiter bevorzugt > 300 µm, beträgt.

3. Industrielles Röntgen-Werkstückvermessungssystem, insbesondere industrielles Röntgentomografiesystem, nach Anspruch 1 oder 2, **dadurch gekennzeichnet, dass**
ein Abstand zwischen einer Drehachse der Werkstückträgermittel und den Szintillatormitteln im ersten Betriebszustand verschieden zu dem Abstand im zweiten Betriebszustand eingerichtet ist und/oder ein Mantelabstand (A1) zwischen einem Mantel eines ein auf den Werkstückträgermitteln aufgenommenen Werkstücks berührend umhüllenden gedachten Zylinders und den Szintillatormitteln im ersten Betriebszustand verschieden ist von einem Mantelabstand (A2) des umhüllenden Zylinders im zweiten Betriebsmodus und/oder mindestens einer dieser Mantelabstände einen nicht-berührenden kleinsten Abstand zu den Szintillatormitteln realisiert.

4. Industrielles Röntgen-Werkstückvermessungssystem, insbesondere industrielles Röntgentomografiesystem, nach einem der Ansprüche 1 bis 3, **dadurch gekennzeichnet, dass**
die Werkstückträgermittel und/oder die Szintillatormittel so ausgebildet und eingerichtet sind, dass ein Mantelabstand zwischen einem Mantel eines ein auf den Werkstückträgermitteln aufgenommenen Werkstücks berührend umhüllenden gedachten Zylinders und den Szintillatormitteln, bezogen auf den Durchmesser des Zylinders, ein Verhältnis kleiner 1, bevorzugt kleiner 0,3, weiter bevorzugt kleiner 0,1, ausbildet.

5. Industrielles Röntgen-Werkstückvermessungssystem, insbesondere industrielles Röntgentomografiesystem, nach einem der Ansprüche 1 bis 4, **dadurch gekennzeichnet, dass**
die erste und die zweite Szintillatorbaugruppe durch manuellen Zugriff einer Bedienperson und/oder mittels Handhabungsmitteln automatisiert durch einen Verschiebe-, Dreh- und/oder Verschwenkbetrieb austauschbar ausgebildet ist.

6. Industrielles Röntgen-Werkstückvermessungssystem, insbesondere industrielles Röntgentomografiesystem, nach einem der Ansprüche 1 bis 5, **dadurch gekennzeichnet, dass**
die Lichtaustrittsfläche von der Sensorauftrittsfläche durch ein einstell- und/oder einrichtbares Längenmaß insbesondere unter Zwischenschaltung von Lichtübertragungsmitteln (25; 52; 41) beabstandet ist und/oder für den ersten und den zweiten Betriebsmodus verschieden ist.

7. Industrielles Röntgen-Werkstückvermessungssystem, insbesondere industrielles Röntgentomografiesystem, nach Anspruch 6, **dadurch gekennzeichnet, dass**
aus der Lichtaustrittsfläche austretende Lichtstrahlen des sichtbaren Lichts durch als skalierend und bevorzugt verkleinernd wirkende Bildprojektionsmittel ausgebildete der Lichtübertragungsmittel auf die Sensorauftrittsfläche abbildbar sind,
wobei weiter bevorzugt das Verhältnis der Lichtaustrittsfläche bezogen auf die Sensorauftrittsfläche zwischen 1 und 10 beträgt.

8. Industrielles Röntgen-Werkstückvermessungssystem, insbesondere industrielles Röntgentomografiesystem, nach Anspruch 6 oder 7, **dadurch gekennzeichnet, dass**
die Lichtübertragungsmittel, insbesondere die Bildprojektionsmittel, unter Einschluss der optischen Detektormittel als Kameramodul (22; 24; 26), insbesondere als mindestens eine ein Objektiv (25) aufweisende Digitalkamera, ausgebildet sind.

9. Industrielles Röntgen-Werkstückvermessungssystem, insbesondere industrielles Röntgentomografiesystem, nach Anspruch 8, **dadurch gekennzeichnet, dass**
eine die Bildprojektionsmittel und die optischen Detektormittel realisierende Mehrzahl von Kameramodulen so ausgebildet und/oder angeordnet ist, dass mindestens eines der Kameramodule eine erste Teilfläche (18a) der Lichtaustrittsfläche auf die Sensorauftrittsfläche des zugehörigen Kameramoduls abbildet
und/oder eine der ersten Teilfläche benachbarte oder in diese eingebettete zweite Teilfläche (18b, 18c) von einem weiteren der Kameramodule (26) angrenzend oder überlappend erfasst wird und/oder die durch die Kameramodule realisierten optischen Detektormittel voneinander verschiedene physikalische Pixeldichten aufweisen.

10. Industrielles Röntgen-Werkstückvermessungssystem, insbesondere industrielles Röntgentomografiesystem, nach einem der Ansprüche 6 bis 9, **dadurch gekennzeichnet, dass** die Lichtübertragungsmittel als bevorzugt skalierend und weiter bevorzugt verkleinernd wirkende Anordnung faseroptischer Lichtleitelemente realisiert sind.

11. Industrielles Röntgen-Werkstückvermessungssystem, insbesondere industrielles Röntgentomografiesystem, nach einem der Ansprüche 1 bis 10, **dadurch gekennzeichnet, dass**
die Szintillatormittel und die optischen Detektormittel modulartig (10a, 10b, 10c) als austausch- und bevorzugt automatisiert wechselbare Einheit realisiert sind, weiter bevorzugt unter Einschluss mindestens einer Digitalkamera als optisches Detektormittel.

12. Industrielles Röntgen-Werkstückvermessungssystem, insbesondere industrielles Röntgentomografiesystem, nach einem der Ansprüche 1 bis 11, **dadurch gekennzeichnet, dass**
die Werkstückträgermittel entlang einer zwischen der Röntgenquelle und den Szintillatormitteln aufgespannten Achse verstell- und/oder verschiebbar ausgebildet sind.

13. Verfahren zur Röntgenvermessung eines Werkstücks, insbesondere zur röntgentomografischen Vermessung eines nicht-medizinischen Werkstücks, als Verfahren zum Betreiben des Systems nach einem der Ansprüche 1 bis 12, **gekennzeichnet durch** die Schritte:
- Vorsehen des zu vermessenden Werkstücks auf den Werkstückträgermitteln;
- Auswählen und/oder Einrichten der optischen Detektormittel in Abhängigkeit von einem Dimensionsmaß des zu untersuchenden Werkstücks, insbesondere einer für die Untersuchung relevanten Werkstückteilbereichsdimension des Werkstücks, sowie in Abhängigkeit von der Fläche des Röntgenbrennflecks;
- Auswählen und/oder Einrichten der Szintillatormittel in Abhängigkeit von den optischen Detektormitteln, insbesondere der von der optischen Detektormitteln für die elektronische Auswertung angebotenen effektiven Pixeldichte; und
- Durchstrahlen des Werkstücks durch Aktivieren der Röntgenquelle und Auswerten der Bildpixel der optischen Detektormittel mit der effektiven Pixeldichte.

14. Verfahren nach Anspruch 13, **dadurch gekennzeichnet, dass** das Vorsehen des zu vermessenden Werkstücks auf den Werkstück-Trägermitteln so erfolgt, dass ein Mantelabstand zwischen einem Mantel des auf den Werkstückträgermitteln aufgenommenen Werkstücks berührend umhüllenden gedachten Zylinders und den Szintillatormitteln einen nicht-berührenden Mindestabstand realisiert, insbesondere durch Verstellen oder Verschieben der Werkstückträgermittel entlang einer zwischen der Röntgenquelle und den Szintillatormitteln aufgespannten Achse.

## Claims

1. An industrial X-ray workpiece measuring system, in particular an industrial X-ray tomography system, comprising an X-ray source (4) disposed in an X-ray protection housing (2) and having an X-ray focal spot (3),
workpiece support means for holding a non-medical workpiece (5) to be examined, the workpiece support means being disposed in the X-ray protection housing and preferably configured to perform a rotary motion, and
X-ray detector means (10a, 10b, 10c) provided on and/or in the X-ray protection housing and configured to detect an X-ray of the X-ray source radiographing a workpiece held on the workpiece support means,
downstream of which electronic evaluation means, in particular for defect evaluation of an X-ray image of the workpiece to be examined produced by the X-ray detector means, can be disposed,
the X-ray detector means comprising scintillator means (20) for converting incident X-rays into visible light on a light exit surface (18) and optical detector means (28) disposed optically downstream thereof and comprising a plurality of image pixels in a physical pixel density disposed adjacent to each other at regular intervals and forming a common sensor incidence surface,
the image pixels detecting the visible light produced by the scintillator means for electronic evaluation at an effective pixel density,
the optical detector means are configured in such a manner that the physical and/or the effective pixel density can be changed in a predetermined manner, in particular as a function of a specific dimension of the workpiece to be examined, during configuration, set-up, interchange and/or evaluation of the optical detector means, and/or
a ratio of the light exit surface relative to the sensor incidence surface does not equal 1 and/or can be changed during configuration, set-up, interchange and/or evaluation of the optical detector means, **characterized in that**
a first scintillator module realizing the scintillator means is configured to be interchangeable with a second scintillator module differing from the first scintillator module in a blur property relevant to X-ray conversion,
and that the X-ray focal spot effective for an X-ray output from the X-ray source is dimensioned and configured in such a manner that the area of the X-ray focal spot is greater than or equal to a pixel surface size resulting from the inverse of the effective pixel density,
the industrial X-ray workpiece measuring system being configured in such a manner that it can be transferred from a first operating mode with a first physical and/or effective pixel density to a second operating mode with a second physical and/or effective pixel density, which differs from the first one, by configuration, set-up, interchange and/or evaluation of the optical detector means,
and the first scintillator module being assigned to the first operating mode and the second scintillator module being assigned to the second operating mode.

2. The industrial X-ray workpiece measuring system, in particular the industrial X-ray tomography system, according to claim 1, **characterized in that** the area of the X-ray focal spot (3) is more than five times, preferably more than ten times, the pixel surface size, and/or
a focal point size of the X-ray source is > 50 µm, preferably > 150 µm, further preferably > 300 µm.

3. The industrial X-ray workpiece measuring system, in particular the industrial X-ray tomography system, according to claim 1 or 2, **characterized in that**
a distance between an axis of rotation of the workpiece support means and the scintillator means in the first operating mode is configured to be different from the distance in the second operating mode, and/or
a surface distance (A1) between a surface of an imaginary cylinder surrounding and being in contact with the workpiece held on the workpiece support means and the scintillator means in the first operating mode is different from a surface distance (A2) of the surrounding cylinder in the second operating mode, and/or at least one of said surface distances realizes a no-contact smallest distance from the scintillator means.

4. The industrial X-ray workpiece measuring system, in particular the industrial X-ray tomography system, according to any one of claims 1 to 3, **characterized in that**
the workpiece support means and/or the scintillator means are realized and configured in such a manner that a surface distance between a surface of an imaginary cylinder surrounding and being in contact with a workpiece held on the workpiece support means and the scintillator means presents a ratio of less than 1, preferably less than 0.3, further preferably less than 0.1, relative to the diameter of the cylinder.

5. The industrial X-ray workpiece measuring system, in particular the industrial X-ray tomography system, according to any one of claims 1 to 4, **characterized in that**
the first and second scintillator modules are configured to be interchangeable by manual access of an operator and/or automatically by means of handling means by shifting, rotating and/or pivoting operation.

6. The industrial X-ray workpiece measuring system, in particular the industrial X-ray tomography system, according to any one of claims 1 to 5, **characterized in that**
the light exit surface is spaced apart from the sensor incidence surface by an adjustable and/or settable length, in particular with light transmission means (25; 52; 41) being interposed, and/or is different for the first and the second operating mode.

7. The industrial X-ray workpiece measuring system, in particular the industrial X-ray tomography system, according to claim 6, **characterized in that**
light beams of the visible light exiting the light exit surface can be projected onto the sensor incidence surface by light transmission means that are realized as image projection means effecting scaling and preferably miniaturization,
the ratio of the light exit surface relative to the sensor incidence surface further preferably being between 1 and 10.

8. The industrial X-ray workpiece measuring system, in particular the industrial X-ray tomography system, according to claim 6 or 7, **characterized in that**
the light transmission means, in particular the image projection means, with the optical detector means being included, are realized as a camera module (22; 24; 26), in particular as a digital camera having at least one lens (25).

9. The industrial X-ray workpiece measuring system, in particular the industrial X-ray tomography system, according to claim 8, **characterized in that**
a plurality of camera modules forming the image projection means and the optical detector means is configured and/or disposed in such a manner that at least one of the camera modules projects a first partial surface (18a) of the light exit surface onto the sensor incidence surface of the assigned camera module,
and/or a second partial surface (18b, 18c) adjacent to or embedded in the first partial surface is captured by another one of the camera modules (26) in an adjacent or overlapping manner,
and/or the optical detector means formed by the camera modules have different physical pixel densities.

10. The industrial X-ray workpiece measuring system, in particular the industrial X-ray tomography system, according to any one of claims 6 to 9, **characterized in that** the light transmission means are realized as an assembly of fiber-optic light guide elements preferably effecting scaling and further preferably effecting miniaturization.

11. The industrial X-ray workpiece measuring system, in particular the industrial X-ray tomography system, according to any one of claims 1 to 10, **characterized in that**
the scintillator means and the optical detector means are realized as an interchangeable and preferably automatically changeable unit in the manner of a module (10a, 10b, 10c), further preferably with at least one digital camera being included as an optical detector means.

12. The industrial X-ray workpiece measuring system, in particular the industrial X-ray tomography system, according to any one of claims 1 to 11, **characterized in that**
the workpiece support means are configured to be adjustable and/or displaceable along an axis extending between the X-ray source and the scintillator means.

13. A method for X-ray measuring of a workpiece, in particular for X-ray tomographic measuring of a non-medical workpiece, as a method for operating the system according to any one of claims 1 to 12, **characterized by** the steps:
- providing the workpiece to be measured on the workpiece support means;
- selecting and/or configuring the optical detector means as a function of a specific dimension of the workpiece to be examined, in particular a dimension of a portion of the workpiece relevant to the examination, and as a function of the area of the X-ray focal spot;
- selecting and/or configuring the scintillator means as a function of the optical detector means, in particular the effective pixel density offered for the electronic evaluation by the optical detector means; and
- radiographing the workpiece by activating the X-ray source and evaluating the image pixels of the optical detector means with the effective pixel density.

14. The method according to claim 13, **characterized in that** the workpiece to be measured is provided on the workpiece support means in such a manner that a surface distance between a surface of the imaginary cylinder surrounding and being in contact with the workpiece held on the workpiece support means and the scintillator means realizes a no-contact minimum distance, in particular by adjusting or displacing the workpiece support means along an axis extending between the X-ray source and the scintillator means.

## Revendications

1. Système de mesure de pièces à rayons X industriel, notamment système de tomographie à rayons X industriel, comprenant une source de rayons X (4) disposée dans un boitier de protection contre les rayons X (2) et ayant un foyer de rayons X (3),
des moyens de support de pièce pour loger une pièce non médicale (5) à examiner, les moyens de support de pièce étant disposés dans le boitier de protection contre les rayons X et configurés de préférence pour exécuter un mouvement rotatif, et des moyens de détection de rayons X (10a, 10b, 10c) disposés sur et/ou dans le boitier de protection contre les rayons X et configurés pour détecter un rayon X de la source de rayons X radiographiant une pièce supportée sur les moyens de support de pièce,
en aval desquels peuvent être disposés des moyens d'évaluation électriques, notamment pour l'évaluation d'erreurs d'une image à rayons X de la pièce à examiner produite par les moyens de détection de rayons X,
les moyens de détection de rayons X comprenant des moyens de scintillateur (20) pour convertir des rayons X incidents en lumière visible à une surface de sortie de lumière (18)
et des moyens de détection optiques (28) qui sont disposés optiquement en aval de ceux-ci et qui comprennent une pluralité de pixels d'image à une densité de pixels physique disposés l'un adjacent à l'autre à intervalles réguliers et formant une surface d'incidence de capteur commune,
les pixels d'image détectant la lumière visible produite par les moyens de scintillateur pour l'évaluation électronique à une densité de pixels effective,
que les moyens de détection optiques sont configurés de telle manière que la densité de pixels physique et/ou effective peut être changée de manière prédéterminée, notamment en fonction d'un dimension spécifique de la pièce à examiner, pendant la configuration, l'installation, l'échange et/ou l'évaluation des moyens de détection optiques,
et/ou
un ratio de la surface de sortie de lumière par rapport à la surface d'incidence de capteur n'est pas égal à 1 et/ou peut être changé pendant la configuration, l'installation, l'échange et/ou l'évaluation des moyens de détection optiques,
**caractérisé en ce**
**qu'**un premier module de scintillateur réalisant les moyens de scintillateur est configuré pour être interchangeable avec un deuxième module de scintillateur différant du premier module de scintillateur par une propriété de flou importante pour la conversion de rayons X,
et en ce que le foyer de rayons X effective pour une sortie de rayons X de la source de rayons X est dimensionné et configuré de telle manière que l'aire du foyer de rayons X est supérieure ou égale à une dimension de surface de pixel résultant de l'inverse de la densité de pixel effective,
le système de mesure de pièces à rayons X industriel étant configuré de telle manière qu'il peut être transféré d'un premier mode de fonctionnement avec une première densité de pixel physique et/ou effective à un deuxième mode de fonctionnement avec une deuxième densité de pixel physique et/ou effective, qui diffère de la première, par la configuration, l'installation, l'échange et/ou l'évaluation des moyens de détection optiques,
et le premier module de scintillateur étant associé au premier mode de fonctionnement et le deuxième module de scintillateur étant associé au deuxième mode de fonctionnement.

2. Système de mesure de pièces à rayons X industriel, notamment système de tomographie à rayons X industriel, selon la revendication 1, **caractérisé en ce que** l'aire du foyer de rayons X (3) est supérieure à cinq fois, de préférence supérieure à dix fois, la dimension de surface de pixel, et/ou
une taille de foyer de la source de rayons X est > 50 µm, de préférence > 150 µm, ou mieux > 300 µm.

3. Système de mesure de pièces à rayons X industriel, notamment système de tomographie à rayons X industriel, selon la revendication 1 ou 2, **caractérisé en ce**
**qu'**une distance entre un axe de rotation des moyens de support de pièce et les moyens de scintillateur dans le premier mode de fonctionnement est configurée pour différer de la distance dans le deuxième mode de fonctionnement, et/ou qu'une distance de surface circonférentielle (A1) entre une surface circonférentielle d'un cylindre imaginaire entourant et étant en contact avec la pièce logée sur les moyens de support de pièce et les moyens de scintillateur dans le premier mode de fonctionnement diffère d'une distance de surface circonférentielle (A2) du cylindre entourant dans le deuxième mode de fonctionnement, et/ou au moins une parmi lesdites distances de surface circonférentielle réalise une distance la plus petite sans contact par rapport aux moyens de scintillateur.

4. Système de mesure de pièces à rayons X industriel, notamment système de tomographie à rayons X industriel, selon l'une quelconque des revendications 1 à 3, **caractérisé en ce que** les moyens de support de pièce et/ou les moyens de scintillateur sont réalisés et configurés de telle manière qu'une distance de surface circonférentielle entre une surface circonférentielle d'un cylindre imaginaire entourant et étant en contact avec une pièce logée sur les moyens de support de pièce et les moyens de scintillateur présente un ratio inférieur à 1, de préférence inférieur à 0,3, ou mieux inférieur à 0,1, par rapport au diamètre du cylindre.

5. Système de mesure de pièces à rayons X industriel, notamment système de tomographie à rayons X industriel, selon l'une quelconque des revendications 1 à 4, **caractérisé en ce que** le premier et le deuxième module de scintillateur sont configurés pour être interchangeable par accès manuel d'un opérateur et/ou automatiquement au moyen de moyens de manipulation par une opération de déplacement, de rotation et/ou de pivotement.

6. Système de mesure de pièces à rayons X industriel, notamment système de tomographie à rayons X industriel, selon l'une quelconque des revendications 1 à 5, **caractérisé en ce que** la surface de sortie de lumière est espacée de la surface d'incidence de capteur par une longueur ajustable et/ou réglable, notamment en interposant des moyens de transmission de lumière (25 ; 52 ; 41), et/ou diffère pour le premier et le deuxième mode de fonctionnement.

7. Système de mesure de pièces à rayons X industriel, notamment système de tomographie à rayons X industriel, selon la revendication 6, **caractérisé en ce que**
des rayons lumineux de la lumière visible sortant de la surface de sortie de lumière peuvent être projetés sur la surface d'incidence de capteur par des moyens de transmission de lumière qui sont réalisés comme moyens de projection d'images effectuant un redimensionnement et de préférence une miniaturisation,
le ratio de la surface de sortie de lumière par rapport à la surface d'incidence de capteur étant de préférence entre 1 et 10.

8. Système de mesure de pièces à rayons X industriel, notamment système de tomographie à rayons X industriel, selon la revendication 6 ou 7, **caractérisé en ce que** les moyens de transmission de lumière, notamment les moyens de projection d'image, en incluant les moyens de détection optiques, sont réalisés comme module de caméra (22 ; 24 ; 26), notamment comme caméra numérique ayant au moins une lentille (25).

9. Système de mesure de pièces à rayons X industriel, notamment système de tomographie à rayons X industriel, selon la revendication 8, **caractérisé en ce**
**qu'**une pluralité de modules de caméra réalisant les moyens de projection d'image et les moyens de détection optiques est configurée et/ou disposée de telle manière qu'au moins un parmi les modules de caméra projette une première surface partielle (18a) de la surface de sortie de lumière sur la surface d'incidence de capteur du module de caméra associé,
et/ou qu'une deuxième surface partielle (18b, 18c) adjacente à ou encastrée dans la première surface partielle est capturée par un des autres modules de caméra (26) d'une manière adjacente ou chevauchante,
et/ou que les moyens de détection optiques réalisés par les modules de caméra ont des densités de pixel physiques différentes l'un de l'autre.

10. Système de mesure de pièces à rayons X industriel, notamment système de tomographie à rayons X industriel, selon l'une quelconque des revendications 6 à 9, **caractérisé en ce que** les moyens de transmission de lumière sont réalisés comme ensemble d'éléments conducteurs de lumière à fibre optique effectuant de préférence un redimensionnement ou mieux une miniaturisation.

11. Système de mesure de pièces à rayons X industriel, notamment système de tomographie à rayons X industriel, selon l'une quelconque des revendications 1 à 10, **caractérisé en ce que** les moyens de scintillateur et les moyens de détection optiques sont réalisés comme unité interchangeable et de préférence automatiquement échangeable de manière modulaire (10a, 10b, 10c), de préférence en incluant au moins une caméra numérique comme moyen de détection optique.

12. Système de mesure de pièces à rayons X industriel, notamment système de tomographie à rayons X industriel, selon l'une quelconque des revendications 1 à 11, **caractérisé en ce que** les moyens de support de pièce sont configurés pour être ajustables et/ou déplaçables le long d'un axe s'étendant entre la source de rayons X et les moyens de scintillateur.

13. Procédé de mesure d'une pièce à rayons X, notamment de mesure tomographique d'une pièce non médicale à rayons X, comme procédé pour faire fonctionner le système selon l'une quelconque des revendications 1 à 12, **caractérisé par** les étapes consistant à :
- fournir la pièce à mesurer sur les moyens de support de pièce ;
- sélectionner et/ou configurer les moyens de détection optiques en fonction d'une dimension spécifique de la pièce à examiner, notamment d'une dimension d'une partie de la pièce importante pour l'examen, et en fonction de l'aire du foyer de rayons X ;
- sélectionner et/ou configurer les moyens de scintillateur en fonction des moyens de détection optiques, notamment une densité de pixel effective offerte par les moyens de détection optiques pour l'évaluation électronique ; et
- radiographier la pièce en activant la source de rayons X et évaluer les pixels d'image des moyens de détection optiques à la densité de pixel effective.

14. Procédé selon la revendication 13, **caractérisé en ce que** la pièce à mesurer est fournie sur les moyens de support de pièce de telle manière qu'une distance de surface circonférentielle entre une surface circonférentielle d'un cylindre imaginaire entourant et étant en contact avec la pièce logée sur les moyens de support de pièce et les moyens de scintillateur réalise une distance minimale sans contact, notamment en ajustant ou déplaçant les moyens de support de pièce le long d'un axe s'étendant entre la source de rayons X et les moyens de scintillateur.
